# EUROPEAN PATENT SPECIFICATION

(11) **EP 1 475 922 B1**
(45) Date of publication and mention of the grant of the patent: **25.07.2007**
(21) Application number: 04252670.7
(22) Date of filing: 07.05.2004
(51) Int. Cl.: H04L 12/26, H04L 12/24, H04L 12/56

(54) **Data processing device, data processing system, data processing method, data processing program and recording medium storing the program**
Datenverarbeitungsvorrichtung, -system und -verfahren, Speichermedium und Rechnerprogramm für das Datenverarbeitungsverfahren
Dispositif et système de traitement de données, procédé de traitement de données, programme pour le procédé de traitement de données et support d'enregistrement pour le programme

(30) Priority: 09.05.2003 JP 2003131477
(43) Date of publication of application: 10.11.2004
(73) Proprietor: Pioneer Corporation, Tokyo 153-8654 (JP)
(72) Inventor: Matsuura, Koji, c/o Pioneer Corporation, Tokorozawa-shi, Saitama 359-8522 (JP)
(74) Representative: Haley, Stephen

(56) References cited:
- WO-A-00/56021
- SISALEM D ET AL: "The Loss-Delay Adjustment Algorithm: A TCP-friendly Adaptation Scheme" RESEARCH PAPER, 8 July 1998 (1998-07-08), XP002226884

## Description

### BACKGROUND OF THE INVENTION

### 1. FIELD OF THE INVENTION

The present invention relates to a data processing device, a data processing system, a data processing method and a data processing program for processing data transmitted or received data by way of a network as well as to a recording medium storing the program.

### 2. DESCRIPTION OF RELATED ART

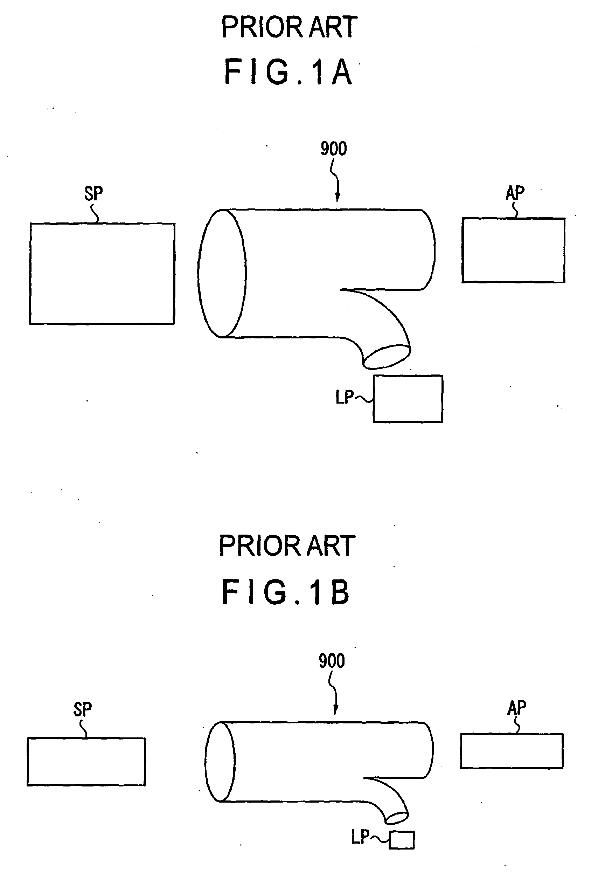

Data sending/receiving systems adapted to transmit data possessed by a server unit to a client unit by way of a network are known. Best effort type networks are also known as a type of networks adapted to be used for such data sending/receiving systems. The Internet is a typical network of the type under consideration and the following description will often refer to the Internet. The Internet has become very popular because of low cost and other reasons, although the transmission speed of the Internet always fluctuates. For instance, when the Internet is operating at a high servicing ratio, part of transmitted packets SP that are sent out from a server unit (not shown) and have data (not shown) can become missing on the Internet 900 as lost packets LS so that the volume of received packet AP arriving at a client unit (not shown) can be smaller than the volume of the packets SP sent out from the server unit as shown in FIG. 1A.

With a conceivable technique for reducing the volume of lost packets LP, the degree of usefulness, or an effective transmission speed, of the Internet 900 will be computed. Then, the obtained effective transmission speed will be fed back to the server unit and the transmission speed of the transmitted packet SP will be modified according to the effective transmission speed for reducing the volume of the lost packet LP as shown in FIG. 1B. To compute the effective transmission speed, firstly transmitted packets SP are sent from the server unit to the client unit by way of the Internet 900. Then, the transmission speed of the transmitted packets SP and the ratio of the received packet AP that arrived to the client unit within a predetermined time to the transmitted packets SP (to be referred to as arriving ratio of the transmitted packet SP hereinafter) are detected on the basis of the information described in a header (not shown) of the received packet AP that arrived the client unit and the obtained values are multiplied by each other. With this computing technique using the information described in the headers of the received packet AP, if, for example, the transmission speed of the transmitted packets SP is 10 Mbps (mega bits per second) and the arriving ratio of the transmitted packets SP is 50%, the effective transmission speed is determined to be 5 Mbps.

With the above described known effective transmission speed computing method, if the transmission speed of the transmitted packets SP is 5 Mbps and the arriving ratio of the transmitted packets SP is 100%, the effective transmission speed is determined to be 5 Mbps. When the arriving ratio of the transmitted packets SP is 100%, it may be either because the transmission speed of the transmitted packets SP agrees with the effective transmission speed of the Internet 900 or because the effective transmission speed of the Internet 900 is greater than the transmission speed of the transmitted packets SP. However, with the known computing method, it is not possible to know which of the two reasons made the arriving ratio to be equal to 100%. In other words, with the known computing method, it is not possible to compute the effective transmission speed when the effective transmission speed of the Internet 900 is increased.

It may be conceivable to compute the increase in the effective transmission speed of the Internet 900 by constantly transmitting a large volume of transmitted packets SP from the server unit so as to intentionally produce lost packets LP or a situation where the arriving ratio of the transmitted packets SP is short of 100% and predict the rise in the effective transmission speed. However, with this method, there can occur a problem that lost packets LP take place to a large extent depending on the degree of the usefulness of the Internet 900 to lose data so that many transmitted packets SP can become defective in the Internet 900.

Prior art document "The Loss-Delay Based Adjustment Algorithm: ATCP-Friendly Adaptation Scheme", by D. Sisalem et al., 8.7.1998, discloses the adaptation of the transmission rate of multimedia applications to the congestion level of the network.

### SUMMARY OF THE INVENTION

An object of the present invention is to provide a data processing device, a data processing system, a data processing method and a data processing program as well as a recording medium storing the program for appropriately computing an effective transmission speed of a network.

A data processing device according to an aspect of the present invention for transmitting data by way of a network, includes: a data packet generator for generating data packets by dividing data; a diagnostic packet generator for generating dummy packets to be used for computing the effective transmission speed of the network; a transmission controller for transmitting the data packets and the dummy packets by way of the network on a time division basis so as to transmit the dummy packets at a transmission speed higher than a transmission speed of the data packets by acquiring and recognizing a request signal requesting transmission of the data; and a speed specifier for acquiring speed information on the effective transmission speed as computed on the basis of the volume of the dummy packets missing on the network at the transmission by the transmission controller and specifying the transmission speed of the data packets by the transmission controller on the basis of the acquired speed information.

A data processing device according to another aspect of the present invention for transmitting data by way of a network, includes: a data packet generator for generating data packets by dividing data; a diagnostic packet generator for generating dummy packets having priority information on priority lower than priority of the data packets for transmission by way of the network; a transmission controller for transmitting the dummy packets along with the data packets by way of the network by acquiring and recognizing a request signal requesting transmission of the data; and a speed specifier for acquiring speed information on an effective transmission speed by way of the network as computed on the basis of the volume of the dummy packets missing on the network at the transmission by the transmission controller and specifying a transmission speed of the data packets by the transmission controller on the basis of the acquired speed information.

A data processing device according to still another aspect of the present invention for receiving data by way of a network, includes: a packet receiver for receiving data packets formed by dividing the data and dummy packets to be used for computing an effective transmission speed of the network, the data packets and the dummy packets being transmitted by way of the network on a time division basis; a transmission speed detector for recognizing the volume of the dummy packets missing on the network and relating to the dummy packets received by the packet receiver and computing the effective transmission speed of the network on the basis of the recognized volume of the missing dummy packets; and a speed information generator for generating speed information on the effective transmission speed as computed by the transmission speed detector and transmitting the generated speed information by way of the network.

A data processing device according to a further aspect of the present invention for receiving data by way of a network, includes: a packet receiver for receiving data packets formed by dividing data and dummy packets having priority information on priority lower than the priority of data packets for transmission by way of the network, the data packets and the dummy packets being transmitted by way of the network simultaneously; a transmission speed detector for recognizing the volume of the dummy packets missing on the network and relating to the dummy packets received by the packet receiver and computing the effective transmission speed of the network on the basis of the recognized volume of the missing dummy packets; and a speed information generator for generating speed information on an effective transmission speed as computed by the transmission speed detector and transmitting the generated speed information by way of the network.

A data processing system according to a still further aspect of the present invention transmits data from a server unit having data to a client unit connected to the server unit by way of a network so as to be able to transmit/receive various pieces of information, in which the server unit includes: a data packet generator for generating data packets by dividing data; a diagnostic packet generator for generating dummy packets to be used for computing an effective transmission speed of the network; a transmission controller for transmitting the data packets and the dummy packets on a time division basis so as to transmit the dummy packets at a transmission speed higher than the transmission speed of the data packets by way of the network by acquiring and recognizing a request signal requesting transmission of the data; and a speed specifier for acquiring speed information on an effective transmission speed from the client unit by way of the network and specifying a transmission speed of the data packets by the transmission controller on the basis of the acquired speed information, and the client unit includes: a packet receiver for receiving the data packets and the dummy packet from the server unit by way of the network; a transmission speed detector for recognizing the volume of the dummy packets missing on the network and relating to the dummy packets received by the packet receiver and computing the effective transmission speed of the network on the basis of the recognized volume of the missing dummy packets; and a speed information generator for generating speed information on the effective transmission speed as computed by the transmission speed detector and transmitting the generated speed information to the server unit by way of the network.

A data processing system according to a yet further aspect of the present invention transmits data from a server unit having data to a client unit connected to the server unit by way of a network so as to be able to transmit/receive various pieces of information, in which the server unit includes: a data packet generator for generating data packets by dividing data; a diagnostic packet generator for generating dummy packets having priority information on priority lower than the priority of the data packets for transmission by way of the network; a transmission controller for transmitting the dummy packets along with the data packets by acquiring and recognizing a request signal requesting transmission of the data to the server unit by way of the network; and a speed specifier for acquiring speed information on the effective transmission speed from the client unit by way of the network and specifying a transmission speed of the data packets by the transmission controller on the basis of the acquired speed information, and the client unit includes: a packet receiver for receiving the data packets and the dummy packet; a transmission speed detector for recognizing the volume of the dummy packets missing on the network and relating to the dummy packets received by the packet receiver and computing the effective transmission speed of the network on the basis of the recognized volume of the missing dummy packets; and a speed information generator for generating speed information on the effective transmission speed as computed by the transmission speed detector and transmitting the generated speed information to the server unit by way of the network.

In a yet further aspect of the present invention, there is provided a data processing method of processing data to be transmitted by way of a network by a computer, the method including the steps of: generating data packets by dividing data and dummy packets to be used for computing an effective transmission speed of the network; transmitting the data packets and the dummy packets by way of the network on a time division basis so as to transmit the dummy packets at a transmission speed higher than the transmission speed of the data packets by acquiring and recognizing a request signal requesting transmission of the data; acquiring speed information on the effective transmission speed as computed on the basis of the volume of the dummy packets missing on the network after the transmission, by way of the network; specifying a transmission speed of the data packets on the basis of the acquired speed information; and transmitting the data packets by way of the network at the specified transmission speed.

In a yet further aspect of the present invention, there is provided a data processing method of processing data to be transmitted by way of a network by a computer, the method including the steps of: generating data packets by dividing data and dummy packets having priority information on priority lower than the priority of the data packets for transmission by way of the network; transmitting the dummy packets along with the data packets by way of the network by acquiring and recognizing a request signal requesting transmission of the data; acquiring speed information on the effective transmission speed as computed on the basis of the volume of the dummy packets missing on the network after the transmission, by way of the network; specifying a transmission speed of the data packets on the basis of the acquired speed information; and transmitting the data packets by way of the network at the specified transmission speed.

In a yet further aspect of the present invention, there is provided a data processing method of processing data to be received by way of a network by a computer, the method including the steps of: receiving data packets formed by dividing data and dummy packets to be used for computing the effective transmission speed of the network, the data packets and the dummy packets being transmitted by way of the network on a time division basis; recognizing the volume of the dummy packets missing on the network and relating to the received dummy packets; computing the effective transmission speed of the network on the basis of the recognized volume of the missing dummy packets; generating speed information on the computed effective transmission speed; and transmitting the generated speed information by way of the network.

In a yet further aspect of the invention, there is provided a data processing method of processing data to be received by way of a network by a computer, the method including the steps of: receiving data packets formed by dividing data and dummy packets having priority information on priority lower than the priority of the data packets for transmission by way of the network, the data packets and the dummy packets being transmitted simultaneously; recognizing the volume of the dummy packets missing on the network and relating to the received dummy packets; computing the effective transmission speed of the network on the basis of the recognized volume of the missing dummy packets; generating speed information on the computed effective transmission speed; and transmitting the generated speed information by way of the network.

In a yet further aspect of the invention, there is provided a data processing program executing any of the above-described data processing methods by the computer.

In a yet further aspect of the invention, there is provided a recording medium storing the above data processing program in a manner readable by the computers.

### BRIEF DESCRIPTION OF THE DRAWINGS

FIGS. 1A and 1B are schematic illustrations of known data sending/receiving systems;
FIG. 2 is a schematic block diagram of data sending/receiving system according to a first embodiment of the present invention, showing its configuration;

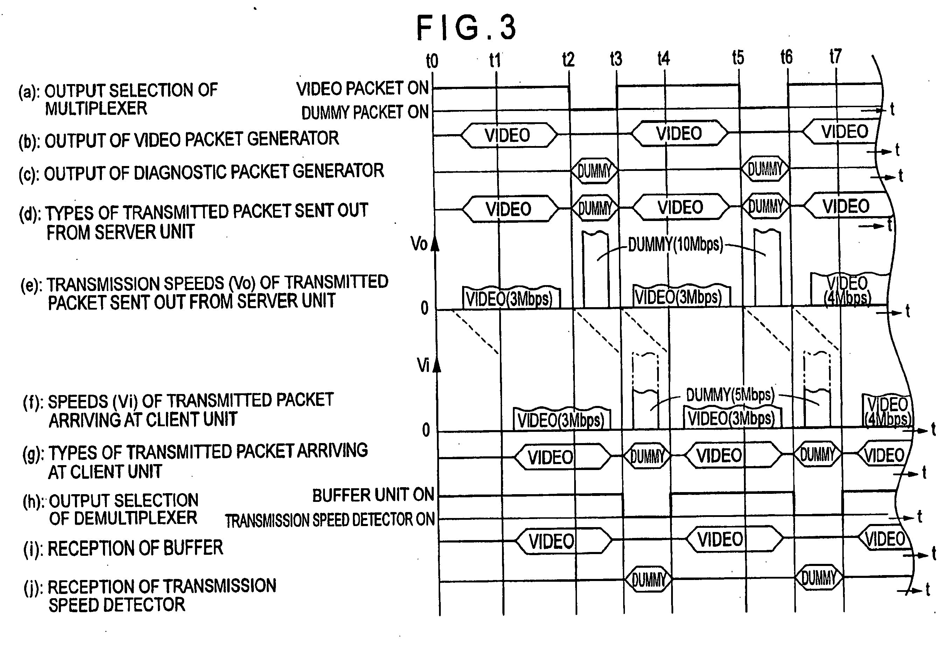

FIGS. 3 is a timing chart of operation of the data sending/receiving system according to the first embodiment, in which (a) shows the output selection of a multiplexer, (b) shows the output of a video packet generator, (c) shows the output of a diagnostic packet generator, (d) shows the types of transmitted packets sent out from a server unit, (e) shows the transmission speeds of transmitted packets sent out from the server unit, (f) shows the speeds of transmitted packets arriving at a client unit, (g) shows the types of transmitted packets arriving at the client unit, (h) shows the output selection of a demultiplexer, (i) shows the reception of a buffer, and (j) shows the reception of a transmission speed detector;
FIG. 4 is a flow chart of operation of receiving packets of the client unit according to the first embodiment;
FIG. 5 is a flow chart of operation of transmitting packets of the server unit according to the first embodiment;
FIG. 6 is a schematic block diagram of data sending/receiving system according to a second embodiment of the present invention, showing its configuration;

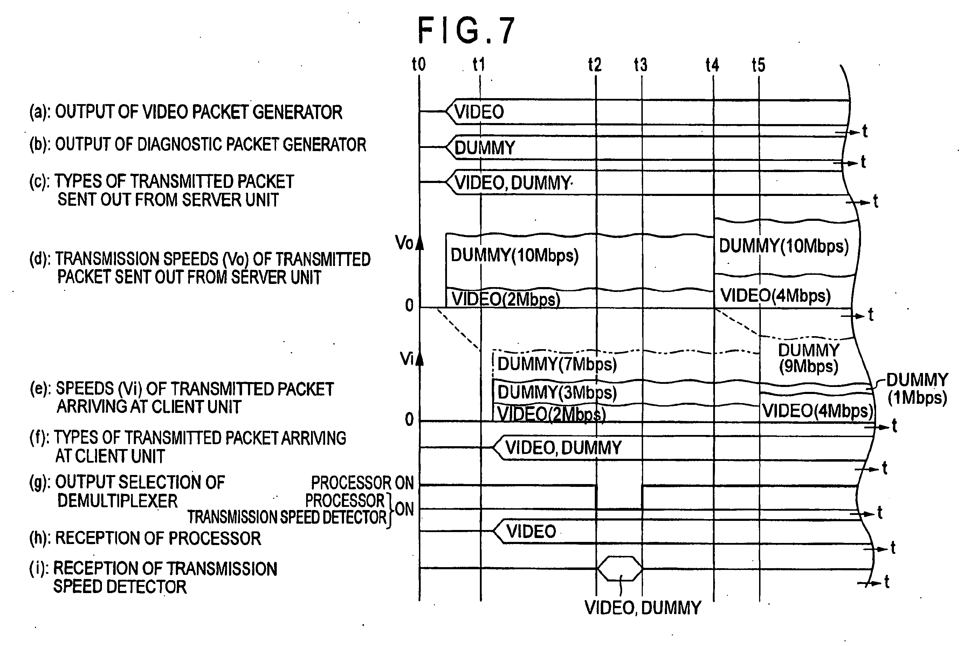

FIGS. 7 is a timing chart of operation of the data sending/receiving system according to the second embodiment, in which (a) shows the output of a video packet generator, (b) shows the output of a diagnostic packet generator, (c) shows the types of transmitted packets sent out from a server unit, (d) shows the transmission speeds of transmitted packets sent out from the server unit, (e) shows the speeds of transmitted packets arriving at a client unit, (f) shows the types of transmitted packets arriving at the client unit, (g) shows the output selection of a demultiplexer, (h) shows the reception of a processor, and (i) shows the reception of a transmission speed detector;
FIG. 8 is a flow chart of operation of transmitting packets of the server unit according to the second embodiment; and
FIG. 9 is a flow chart of operation of receiving packets of the client unit according to the second embodiment.

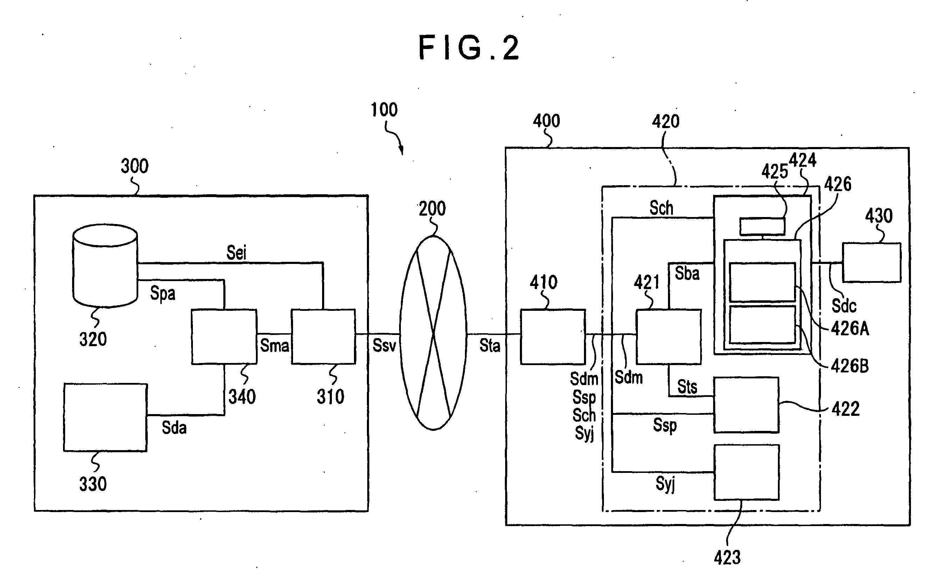

Now, embodiments of data sending/receiving system according to the invention will be described by referring to the accompanying drawings. FIG. 2 is a schematic block diagram of the embodiment of data sending/receiving system, showing its configuration.

### [First Embodiment]

### (Configuration of data sending/receiving system)

Referring to FIG. 2, reference symbol 100 denotes a data sending/receiving system that operates as data processing system. The data sending/receiving system 100 includes the Internet 200 as a network, a server unit 300 that operates also as a data processing device and a client unit 400 that operates also as a data processing device.

The server unit 300 and the client unit 400 are connected to the Internet 200. Assume here that the Internet 200 connects the server unit 300 and the client unit 400 to bring them in a state where information can be transmitted/received at a transmission speed of, for example, 10 Mbps (mega bits per second) (the transmission speed of the Internet 200 is referred to as maximum transmission speed hereinafter). While the maximum transmission speed is defined as 10 Mbps here, it may be defined differently to show a different value. The Internet 200 is a so-called best effort type network that does not guarantee that the data transmitted from the server unit 300 arrive at the client unit 400 without fail and the delay time is always found within a certain time period. Best effort type networks include, for example, LANs (local area networks) such as intranets, extranets and Ethernets (r) that are adapted to operate on the basis of a general purpose protocol such as TCP/IP (Transmission Control Protocol/Internet Protocol), networks such as transmission line networks and broadcasting networks that are formed by a plurality of base stations capable of transmitting/receiving information by way of wireless mediums and wireless mediums by way of which the server unit 300 and the client unit 400 can directly exchange information. Wireless mediums include radio waves, light, sound waves and electromagnetic waves.

The server unit 300 is adapted to transmit data, video data for instance, to the client unit 400 by way of the Internet 200 so that it can transmit information to and receive information from the client unit 400. While this embodiment is described in terms of transmission of video data, the present invention is by no means limited thereto. For example, music data may also be transmitted by this embodiment. The server unit 300 includes an network interface 310, a video packet generator 320, or a data packet generator that also operates as a transmission controller and a speed specifier, a diagnostic packet generator 330 that also operates as a transmission controller and a multiplexer 340 that also operates as a transmission controller.

The network interface 310 performs a predefined interface input processing operation for server connection Ssv input to it by way of the Internet 200 and outputs the processed signal to the video packet generator 320 as processing signal Sei or to the multiplexer 340 as processing server signal Sma. When the processing server signal Sma to be sent to the client unit 400 is input from the multiplexer 340 to the network interface 310, the network interface 310 performs a predetermined interface output processing operation for the input processing server signal Sma and outputs the processed signal to the client unit 400 by way of the Internet 200 as server connection Ssv.

The video packet generator 320 divides the video data to be transmitted to the client unit 400 according to the protocol such as TCP/IP to generate a plurality of video packets (not shown) having a packet size of, for instance, 1,500 bytes. The video packet generator 320 also receives processing signal Sei from the network interface 310 and recognizes the effective transmission speed described in the processing signal Sei as will be described in detail hereinafter. Then, the video packet generator 320 converts the generated video packets into video packet signal Spa and outputs it to the multiplexer 340 at an output speed lower than the effective transmission speed it recognizes.

The video packet has a header, a payload and so on (not shown). The header includes version information, the header length, the packet length, the fragment offset that indicates the position of video data produced as a result of the division in the original video data, the sequence number of the packet, the reception notification number that indicates the sequence number of the packet to be transmitted next and so on. The payload includes video data produced as a result of the division.

The diagnostic packet generator 330 generates dummy packets (not shown) having a packet size of, for instance, 1,500 bytes for the purpose of computing the effective transmission speed of the Internet 200 according to the protocol such as TCP/IP. Then, the diagnostic packet generator 330 converts the generated dummy packets into dummy packet Sda and outputs it to the multiplexer 340 at an output speed of 10 Mbps that is higher than the output speed of the video packet and equal to the maximum transmission speed of the Internet 200. Note that, unlike video packets, dummy packets do not contain any video data.

The dummy packet has a header and so on (not shown). The header includes the above-described information of the header of a video packet except the fragment offset. In other words, the header includes version information, the header length, the packet length, the sequence number, the reception notification number and so on.

The multiplexer 340 controls the operation of transmitting the video packets and the dummy packets to the client unit 400 by the network interface 310 and the Internet 200 on a time division basis according to the processing server signal Sma input from the network interface 310. In other words, as will be described later with reference to FIG. 3e, the multiplexer 340 controls the operation of transmitting the video packets and the dummy packets in such a way that they are alternately transmitted for every predetermined time period. The multiplexer 340 has an output section, a video packet acquiring section, a dummy packet acquiring section, a multiplexer processing section that operates as a switch and so on (not shown).

The output section is connected to the network interface 310. The output section outputs video packets and dummy packets to the network interface 310.

The video packet acquiring section is connected to the video packet generator 320. The video packet acquiring section acquires video packets from the video packet generator 320.

The dummy packet acquiring section is connected to the diagnostic packet generator 330. The dummy packet acquiring section acquires dummy packets from the diagnostic packet generator 330.

The multiplexer processing section is connected to the output section, the video packet acquiring section and the dummy packet acquiring section. Upon recognizing a request signal requesting transmission of the video data as described in the processing server signal Sma input from the network interface 310, the multiplexer processing section acquires the video packet signal Spa output from the video packet generator 320 by the video packet acquiring section. Then, the multiplexer processing section converts the video packets described in the video packet signal Spa into a processing server signal Sma as transmitted packets (not shown) and transmits the transmitted packets at a transmission speed equal to the output speed at which it acquired the video packets.

Additionally, the multiplexer processing section outputs either the video packets or the dummy packets to the network interface 310 according to the packet request information described in the processing server signal input from the network interface 310 as will be described in detail hereinafter. More specifically, when the packet request signal is a signal requesting transmission of video packets, the multiplexer processing section outputs the video packets to the network interface 310 as transmitted packets in a manner as described above. When, on the other hand, the packet request signal is a signal requesting transmission of dummy packets, the multiplexer processing section acquires the dummy packet Sda output from the diagnostic packet generator 330 by the dummy packet acquiring section. Then, it converts the dummy packets described in the dummy packet Sda into processing server signal Sma as transmitted packets (not shown) and outputs the transmitted packets to the network interface 310 at a transmission speed equal to the output speed at which it acquired the dummy packets.

The client unit 400 may, for example, be a personal computer, a television set, a stereophonic audio set or a PDA (personal digital assistant). The client unit 400 has a network interface 410, a computer 420 and a decoder 430 along with an input section, a display and so on (not shown).

The network interface 410 is connected to the server unit 300 by way of the Internet 200 and also to the computer 420. The network interface 410 is adapted to receive client connection Sta from the server unit 300 by way of the Internet 200. Upon receiving a client connection Sta from the server unit 300, the network interface 410 performs a predefined interface input processing operation and outputs a processing client signal Sdm to the computer 420. Additionally, upon receiving at least one of a processing client signal Sdm, a processing signal Ssp, a processing signal Syj and a processing signal Sch from the computer 420, the network interface 410 performs a predefined interface output processing operation and transmits the processed signal to the server unit 300 by way of the Internet 200 as client connection Sta.

The computer 420 has a demultiplexer 421 that operates as an output controller, a transmission speed detector 422 that also operates as a speed information generator, a request signal generator 423 and a buffer 424. The computer 420 outputs the processing client signal Sdm from the demultiplexer 421, the processing signal Ssp from the transmission speed detector 422, the processing signal Syj from the request signal generator 423 and the processing signal Sch from the buffer 424 to the network interface 410.

The demultiplexer 421 controls the operation of outputting the transmitted packets described in the processing client signal Sdm input from the network interface 410 to the transmission speed detector 422 or the buffer 424. Although not shown in FIG. 2, the demultiplexer 421 has an acquiring section, a transmission speed detector side output section, a buffer side output section, a demultiplexer processor and so on.

The acquiring section is connected to the network interface 410. The section acquires video packets or dummy packets from the network interface 410.

The transmission speed detector side output section is connected to the transmission speed detector 422. The section outputs the dummy packets acquired by the acquiring section to the transmission speed detector 422.

The buffer side output section is connected to the buffer 424. The section outputs the video packets acquired by the acquiring section to the buffer 424.

The demultiplexer processor is connected to the acquiring section, the transmission speed detector side output section and the buffer side output section. The demultiplexer processor recognizes the type of transmitted packets described in the processing client signal Sdm input from the network interface 410 and acquired by the acquiring section. Then, if the type of transmitted packets is that of dummy packets, the demultiplexer processor converts the dummy packets into a processing signal Sts and outputs it to the transmission speed detector 422 by the transmission speed detector side output section. If, on the other hand, the type of transmitted packets is that of video packets, the demultiplexer processor converts the video packets into data packet Sba and outputs it to the buffer 424 by the buffer output section.

The transmission speed detector 422 computationally determines the effective transmission speed of the Internet 200. More specifically, the transmission speed detector 422 receives processing signal Sts from the demultiplexer 421. Then, the transmission speed detector 422 recognizes the transmission speed of dummy packets and the ratio of the dummy packets that arrived at the client unit 400 within a predetermined time to the dummy packets transmitted from the server unit 300 (to be referred to as arriving ratio of the dummy packets hereinafter) from the information described in the processing signal Sts including the sequence numbers of the dummy packets. Then, the transmission speed detector 422 determines the effective transmission speed of the Internet 200 by multiplying them by each other. If, for example, the transmission speed of dummy packets is 10 Mbps and the arriving ratio of the dummy packets is 80%, the effective transmission speed is determined to be equal to 8 Mbps. Then, the transmission speed detector 422 generates speed information on the determined effective transmission speed and converts it into processing signal Ssp, which is then output.

The request signal generator 423 recognizes the request information on various requests specified and input by the input section and converts it into processing signal Syj, which is then output.

The buffer 424 has a memory 425 that operates as buffer and a processor 426.

The memory 425 readably stores the video packets received from the demultiplexer 421 and accumulates them. Additionally, the memory 425 stores various programs to be executed on the OS (operating system) that controls the entire operation of the client unit 400. The memory 425 may be a DRAM (dynamic random access memory) or an SRAM (static random access memory).

The processor 426 operates for processing operations, using various programs stored in the memory 425, and has a decoder buffer 426A and a buffer fullness detector 426B.

The decoder buffer 426A readably stores the video packets that are described in the data packet Sba received from the demultiplexer 421 in the memory 425. Then, the section 426A reads and acquires the video packets stored in the memory 425 according to the sequence numbers described in the headers of the video packets. Thereafter, the section 426A converts the acquired video packets into processing signal Sdc and outputs it to the decoder 430 in harmony with the processing speed of the decoder 430.

The buffer fullness detector 426B recognizes the volume of the video packets accumulated in the memory 425 and generates a packet request signal that is related to the accumulated volume of packets it recognizes. More specifically, when the accumulated volume of packets exceeds a predetermined part of the capacity of the memory 425, the buffer fullness detector 426B generates a packet request signal requesting transmission of dummy packets. When, on the other hand, the accumulated volume of packets does not reach a predetermined part of the capacity of the memory 425, the buffer fullness detector 426B generates a packet request signal requesting transmission of video packets. Then, the buffer fullness detector 426B converts the generated packet request signal into processing signal Sch and outputs it.

The decoder 430 reads the video data from the video packets described in the received processing signal Sdc. Then, it outputs the video data that has read to the display (not shown) according to the sequence numbers described in the headers of the video packets, while conducting a coupling operation.

The input section typically includes a keyboard and mouse along with various operation buttons (not shown) that are used for input operations. The operation buttons may be used to specify the operation of the client unit 400. More specifically, the operation buttons may be used to issue an instruction for requesting transmission of video data by way of the Internet 200 and an instruction for specifying the contents of the video data to be acquired. In response to the specifying operation, the input section outputs a predetermined signal to the request signal generator 423 to complete the specifying operation. It will be appreciated that the input section may include not only operation buttons but also a touch panel arranged on a display and a voice input arrangement provided for various specifying operations.

The display (not shown) displays the video data received from the decoder 430 on the display screen thereof. The display can display not only the video data transmitted from the decoder 430 but also TV image data received by a TV set (not shown), image data that is stored in and read from an external recording medium such as an optical disk or a magnetic disk and image data stored in the memory. A liquid crystal panel, an organic EL (electro luminescence) panel, a PDP (plasma display panel) or a CRT (cathode-ray tube) may be used for the display.

### (Operation of the data sending/receiving system)

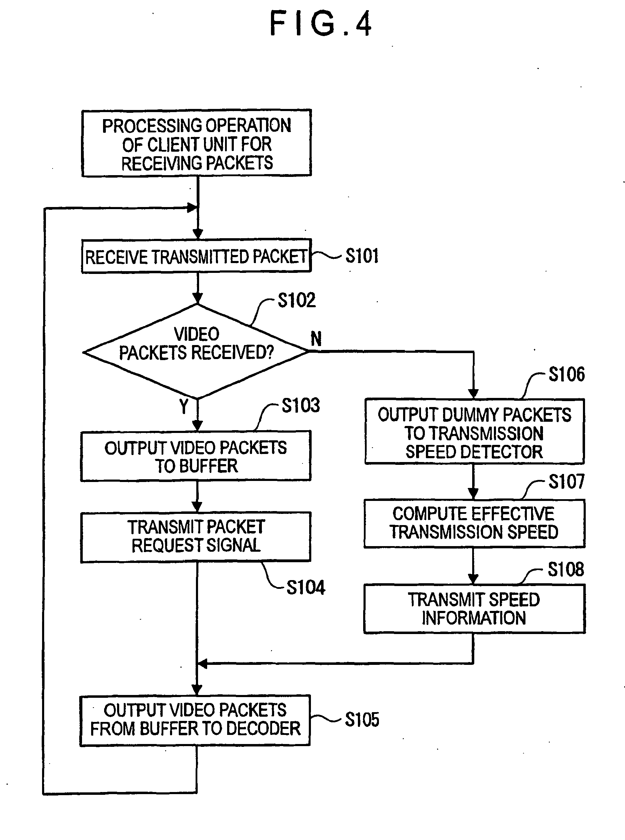

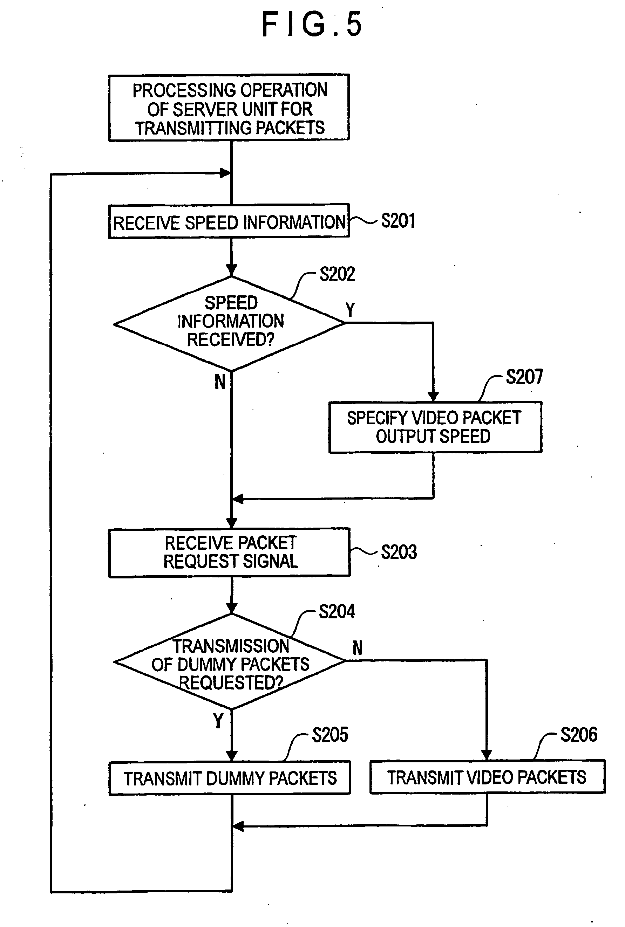

Now, the operation of the data sending/receiving system 100 will be described by referring to FIGS. 3, 4 and 5. FIGS. 3 is timing chart of operation of the data sending/receiving system 100, in which (a) shows the output selection of the multiplexer 340, (b) shows the output of the video packet generator 320, (c) shows the output of the diagnostic packet generator 330, (d) shows the types of transmitted packets sent out from the server unit 300, (e) shows the transmission speeds Vo of transmitted packets sent out from the server unit 300, (f) shows the speeds Vi of transmitted packets arriving at the client unit 400, (g) shows the types of transmitted packets arriving at the client unit 400, (h) shows the output selection of the demultiplexer 421, (i) shows the reception of the buffer 424 and (j) shows the reception of the transmission speed detector 422. FIG. 4 is a flow chart of operation of receiving packets of the client unit 400. FIG. 5 is a flow chart of operation of transmitting packets of the server unit 300.

Firstly, a user inputs a request for transmission of video data, operating the input section (not shown) of the client unit 400. As the request signal generator 423 recognizes the input operation requesting transmission of video data, it generates a request signal requesting transmission of video data and transmits it to the server unit 300 by way of the Internet 200.

Now, referring to FIG. 3, the server unit 300 receives the request signal from the client unit 400 at time t0. Then, the server unit 300 acquires the video packets output from the video packet generator 320 at an output speed of 3 Mbps by the multiplexer 340. Then, the server unit 300 sends out the acquired video packets to the client unit 400 by way of the Internet 200 as transmitted packets at a transmission speed Vo of 3 Mbps as shown in FIG. 3 (e). Assume that the current effective transmission speed of the Internet 200 is 5 Mbps. Thereafter, the server unit 300 repeats the operation of transmitting video packets to the client unit 400 at the transmission speed of 3 Mbps.

Now, the operation of the client unit 400 at time t1 will be described by referring to FIG. 4. At time t1, the client unit 400 receives the transmitted packets transmitted from the server unit 300 at time t0 (Step S101). Since the transmission speed of the video packets that are transmitted packets is 3 Mbps and the effective transmission speed of the Internet 200 is 5 Mbps, there will be no missing video packets on the Internet 200. Thus, the ratio of the video packets transmitted from the server unit 300 to the video packets arriving at the client unit 400 (to be referred to as arriving ratio of the video packets hereinafter) is 100% and the speed Vi of the transmitted packets that are arriving at the client unit 400 is 3 Mbps as shown in FIG. 3 (f).

Then, in the client unit 400, the demultiplexer 421 recognizes the type of the transmitted packets that are being received (Step S 102). Since video packets are being received, the demultiplexer 421 outputs the video packets to the buffer 424 (Step S103). Then, the decoder buffer 426A readably stores the received video packets in the memory 425. Thereafter, the buffer fullness detector 426B generates a packet request signal that is related to the volume of the video packets accumulated in the memory 425 and transmits it to the server unit 300 (Step S104). Then, the decoder buffer 426A reads the video packets accumulated in the memory 425 and outputs them to the decoder 430 by the buffer 424 at a rate in harmony with the processing speed of the decoder 430 (Step S105). The client unit 400 repeats the processing operation from the Steps S101 to S105.

Now, the operation of the server unit 300 at time t2 will be described by referring to FIG. 5. The server unit 300 operates for reception of speed information at time t2 (Step S201) and determines if it could receive speed information or not (Step S202). If it cannot receive speed information, the server unit 300 receives the packet request signal transmitted from the client unit 400 (Step S203) and recognizes the information described in the packet request signal by the multiplexer 340 (Step S204). When the server unit 300 recognizes by the multiplexer 340 that the packet request signal requests transmission of dummy packets, it acquires dummy packets that are to be output at an output speed of 10 Mbps from the diagnostic packet generator 330. Then, it transmits the acquired dummy packets at a transmission speed Vo of 10 Mbps to the client unit 400 as shown in FIG. 3 (e) (Step S205). Thereafter, the server unit 300 repeats the processing operation from the Steps S201 to S205.

Now, the operation of the server unit 300 at time t3 will be described by referring to FIG. 5. If the packet request signal that the server unit 300 received in the Step S203 says that it requests transmission of video packets, the server unit 300 acquires video packets to be output at an output speed of 3 Mbps from the video packet generator 320 at time t3 by the multiplexer 340. Then, it transmits the acquired video packets to the client unit 400 at a transmission speed Vo of 3 Mbps as shown in FIG. 3 (e) (Step S206). Thereafter, the server unit 300 repeats the processing operation from the Steps S201 through S204 and Step 206.

Now, the operation of the client unit 400 at time t3 will be described by referring to FIG. 4. At time t3, the client unit 400 receives the transmitted packets output from the server unit 300 at time t2 in the Step S101 and recognizes that the transmitted packets are dummy packets in the Step S 102.

Then, the client unit 400 outputs the dummy packets to the transmission speed detector 422 by the demultiplexer 421 (Step S106). The transmission speed detector 422 computationally determines the effective transmission speed of the Internet 200 on the basis of the received dummy packets (Step S107). More specifically, the transmission speed detector 422 recognizes that the transmission speed Vo of the dummy packets is 10 Mbps from the information of the headers of the dummy packets arrived at the client unit 400 and also the arriving ratio of the dummy packets. Since the transmission speed Vo of the dummy packets is 10 Mbps and the effective transmission speed of the Internet 200 is 5 Mbps, dummy packets of 5 Mbps will become missing on the Internet 200 as indicated by the two-dot chain lines in FIG. 3 (f). Thus, the speed Vi of the dummy packets arriving at the client unit 400 will be 5 Mbps as indicated by the solid lines in FIG. 3 (f). Therefore, the transmission speed detector 422 recognizes the transmission speed Vo and that the arriving ratio of the dummy packets is 50% from the speed Vi. Then, the transmission speed detector 422 computationally determines the effective transmission speed to be equal to 5 Mbps from the transmission speed and the arriving ratio of the dummy packets it recognizes. Then, the transmission speed detector 422 generates speed information on the effective transmission speed and transmits the generated speed information to the server unit 300 (Step S108). Thereafter, the client unit 400 performs the processing operation of the Step S105. Subsequently, the client unit 400 repeats the processing operation of the Steps S101, S102 and S105 through S108.

At time t4, the client unit 400 receives the transmitted packets output from the server unit 300 at time t3 in the Step S101 and performs the processing operation from the Steps S102 to S105. Thereafter, the client unit 400 repeats the processing operation from the Steps S101 to S105. Since the transmission speed Vo of video packets that are transmitted packets is 3 Mbps as at time t1, the speed Vi of the transmitted packets that arrive at the client unit 400 is 3 Mbps and hence the arriving ratio is 100% as shown in FIG. 3 (f).

At time t5, the server unit 300 performs a processing operation same as the one performed at time t2 and transmits dummy packets at the transmission speed Vo of 10 Mbps to the client unit 400 as transmitted packets as shown in FIG. 3 (e).

At time t6, the server unit 300 receives the speed information transmitted from the client unit 400 in the Step S201 and recognizes the effective transmission speed of the Internet 200 described in the received speed information by the video packet generator 320 in the Step S202. Then, the video packet generator 320 specifies the output speed of the video packets to be output on the basis of the effective transmission speed (Step S207). More specifically, since the effective transmission speed is 5 Mbps, the video packet generator 320 specifies 4 Mbps for the output speed of video packets that is lower than the effective transmission speed. Then, upon receiving the packet request signal requesting transmission of video packets in the Step S203, the server unit 300 performs the processing operation of the Step S205 at the multiplexer 340 and transmits the video packets to the client unit 400 at the transmission speed Vo of 4 Mbps as transmitted packets as shown in FIG. 3 (e). Thereafter, the server unit 300 repeats the processing operation of the Steps S201 through S205 and S207.

On the other hand, at time t6, the client unit 400 performs a processing operation same as the one it performed at time t3. More specifically, it receives the dummy packets output from the server unit 300 at time t5 in the Step S101 and computationally determines the effective transmission speed of the Internet 200 in the Step S107. Then, the client unit 400 transmits information on the speed to the server unit 300 in the step S108. Thereafter, the client unit 400 repeats the processing operation of the Steps S101, S102 and S105 through S108.

At time t7, the client unit 400 performs a processing operation same as the one it performed at time t4 and receives the transmitted packets that are video packets output from the server unit 300 at time t6. While the transmission speed Vo of the video packets is raised to 4 Mbps and different from the transmission speed Vo at time t0 through t2 and time t3 through t5, there will be missing transmitted packets on the Internet 200 because the effective transmission speed of the Internet 200 is 5 Mbps. Therefore, the speed Vi of the transmitted packets arriving at the client unit 400 will be 4 Mbps and the arriving ratio will be 100% as shown in FIG. 3 (f). Then, the server unit 300 and the client unit 400 repeats the above described respective processing operations.

### (Effects and advantages of First embodiment)

As described above, in the first embodiment, the video packet generator 320 of the server unit 300 generates video packets by dividing video data. The diagnostic packet generator 330 generates dummy packets for the purpose of computing the effective transmission speed of the Internet 200. As the server unit 300 recognizes a request signal requesting transmission of video data, it transmits the video packets and the dummy packets to the client unit 400 by the multiplex 340 on a time division basis and the dummy packets are transmitted at the transmission speed Vo that is higher than the transmission speed of video packets. Then, the server unit 300 acquires speed information on the effective transmission speed of the Internet 200 that is computationally determined on the basis of the volume of the dummy packets that are missing on the Internet 200. Then, the server unit 300 specifies the output speed of video packets by the video packet generator 320 on the basis of the effective transmission speed contained in the speed information and transmits the video packets to the client unit 400 by the multiplexer 340 and the Internet 200 at the transmission speed Vo same as the specified output speed.

With this arrangement, even in a case where video packets are transmitted at the transmission speed Vo at which the arrival ratio of the video packets becomes 100% at the client unit 400, dummy packets are transmitted at the transmission speed Vo that is higher than the transmission speed of video packets so as to acquire speed information on the effective transmission speed as computed on the basis of the volume of the dummy packets missing on the Internet 200. Thus, it is possible to determine if the effective transmission speed is higher than the video packet transmission speed Vo or not. For example, when video packets are transmitted at the transmission speed Vo of 3 Mbps at which the video packet arriving ratio at the client unit 400 is 100%, dummy packets are transmitted at the transmission speed Vo of 10 Mbps. Then, it is possible to recognize that the effective transmission speed is 5 Mbps from the speed information on the effective transmission speed as computed on the basis of the transmitted dummy packets because of a situation where the effective transmission speed is higher than the video packet transmission speed Vo. In this way, the effective transmission speed can be correctly estimated even when the effective transmission speed of the Internet 200 rises remarkably.

Additionally, since the effective transmission speed is computed on the basis of the volume of the dummy packets excluding the dummy packets missing on the Intemet 200, it is possible to reduce the volume of video data missing on the Internet 200 that is caused by the computation of the effective transmission speed.

Still additionally, the server unit 300 specifies the transmission speed Vo at which it transmits video packets to the client unit 400 by the video packet generator 320 and the multiplexer 340 on the basis of the effective transmission speed described in the acquired speed information. For instance, the video packet transmission speed Vo is reduced when the Internet 200 is operating at a high servicing ratio, whereas the video packet transmission speed Vo is raised when the Internet 200 is operating at a low servicing ratio. Thus, since video packets are transmitted at a transmission speed Vo that varies as a function of the effective transmission speed of the Internet 200, the volume of missing video packets on the Internet 200 can be minimized so that the image and sound that are provided to the user are relatively free from problems such as interruptions and disturbances. Additionally, the idle time of the Internet 200 is reduced to effectively exploit the Internet 200.

The client unit 400 receives video packets that are generated by dividing video data and dummy packets to be used for computationally determining the effective transmission speed of the Internet 200, which are transmitted on a time division basis, by way of the Internet 200. Then, it recognizes the dummy packet transmission speed Vo by the transmission speed detector 422 and also the arriving ratio of the dummy packets that is determined on the basis of the volume of the dummy packets missing on the Internet 200. Then, the transmission speed detector 422 computes the effective transmission speed of the Internet 200 from the transmission speed Vo and the arriving ratio it recognizes and subsequently generates and transmits speed information on the effective transmission speed to the server unit 300 by way of the Internet 200.

With the above described arrangement, since the transmission speed detector 422 computes the effective transmission speed on the basis of the volume of the dummy packets missing on the Internet 200 that do not contain any video data, it is possible to minimize the volume of video data that are missing on the Internet 200 if they are used for computing the effective transmission speed.

The server unit 300 generates video packets by the video packet generator 320 and dummy packets by the diagnostic packet generator 330. Then, upon recognizing a request signal requesting transmission of video data, the server unit 300 transmits the dummy packets and the video packets to the client unit 400 by way of the Internet 200 on a time division basis, although it transmits the dummy packets at a transmission speed higher than the transmission speed at which it transmits the video packets. Upon receiving the dummy packets, the client unit 400 computes the effective transmission speed of the Internet 200 on the basis of the volume of the dummy packets missing on the Internet 200 in a manner as described above and subsequently generates and transmits speed information on the effective transmission speed to the server unit 300 by way of the Internet 200. Upon acquiring the speed information, the server unit 300 specifies the video packet output speed on the basis of the effective transmission speed in a manner as described above and transmits the video packets to the client unit 400 by way of the Internet 200 at a transmission speed Vo same as the specified output speed.

Therefore, even when the arrival ratio of the video packets is 100%, the transmission speed detector 422 determines the effective transmission speed, using the dummy packets that are transmitted at the transmission speed Vo that is higher than the transmission speed Vo of the video packets. Therefore, it is possible to determine if there is a situation where the video packet transmission speed Vo and the effective transmission speed of the Internet 200 agree with each other or a situation where the effective transmission speed of the Internet 200 is higher than the video packet transmission speed Vo. Thus, the effective transmission speed of the Internet 200 can be computed appropriately even when it rises unexpectedly.

The transmission speed detector 422 computes the effective transmission speed on the basis of the volume of the dummy packets missing on the Intemet 200 and dummy packets do not contain any video data. Therefore, it is possible to reduce the volume of video data missing on the Internet 200 that is attributable to the computation of the effective transmission speed.

Furthermore, the server unit 300 uses the video packet generator 320 and the multiplexer 340 to specify the video packet transmission speed Vo at which it transmits the video packets to the client unit 400 and that is computed by the transmission speed detector 422 on the basis of the effective transmission speed. Thus, the video packets are transmitted at a transmission speed Vo that is determined as a function of the effective transmission speed of the Internet 200 and therefore it is possible to minimize the volume of the video packets missing on the Internet 200 so that the image and sound that are provided to the user are relatively free from problems such as interruptions and disturbances. Additionally, the idle time of the Internet 200 is reduced to effectively exploit the Internet 200.

The multiplexer 340 selects either the video packets or the dummy packets by means of a switch having a simple configuration and transmits the selected packets to the client unit 400. This allows the multiplexer 340 to have a simplified configuration.

The buffer fullness detector 426B of the client unit 400 generates a packet request signal requesting delivery of dummy packets when the accumulated volume of video packets in the memory 425 of the buffer 424 exceeds a predetermined part of the capacity of the memory 425, whereas it generates a packet request signal requesting delivery of video packets when the accumulated volume of video packets in the memory 425 of the buffer 424 does not reach a predetermined part of the capacity of the memory 425. Thereafter, the buffer fullness detector 426B transmits the packet request signal to the server unit 300. Then, the multiplexer 340 of the server unit 300 transmits either video packets or dummy packets to the client unit 400 according to the received packet request signal. Thus, with the arrangement of this embodiment, the memory 425 is monitored in such a way that the volume of video packets accumulated in the memory 425 is substantially held to a constant level and hence video packets can be output to the decoder 430 continuously. Therefore, it is possible to provide the image and sound that are relatively free from problems such as interruptions and disturbances.

Furthermore, 10 Mbps is specified for the dummy packet transmission speed Vo. It is higher than the effective transmission speed of the Internet 200. Therefore, the effective transmission speed of the Internet 200 is determined to be equal to 10 Mbps when the arriving ratio of the dummy packets is equal to 100%, whereas the effective transmission speed of the Internet 200 is determined to be lower than 10 Mbps when the arriving ratio of the dummy packets is lower than 100%. Thus, the effective transmission speed of the Internet 200 can be determined reliably.

Still additionally, it is so arranged that a value smaller than the effective transmission speed of the Internet 200 as determined by the transmission speed detector 422 is specified for the video packet transmission speed Vo. Therefore, the volume of missing video packets on the Internet 200 can be minimized if the effective transmission speed of the Internet 200 falls while transmission of video packets is going on.

The demultiplexer 421 is provided so as to recognize the type of the transmitted packets that arrive at the client unit 400 and output the recognized packet type to the transmission speed detector 422 or the buffer 424. Therefore, transmitted packets can be reliably output.

Still additionally, the demultiplexer 421 is provided with a switch similar to the switch of the multiplexer 340 and transmitted packets are output to the transmission speed detector 422 or the buffer 424. Therefore, the demultiplexer 421 can be made to have a simple configuration.

Finally, since the data sending/receiving system 100 including the server unit 300 and the client unit 400 is adapted to transmit and receive data by way of the Internet 200 that is a best effort type network, the embodiment maximally provides the above described advantages.

### [Second Embodiment]

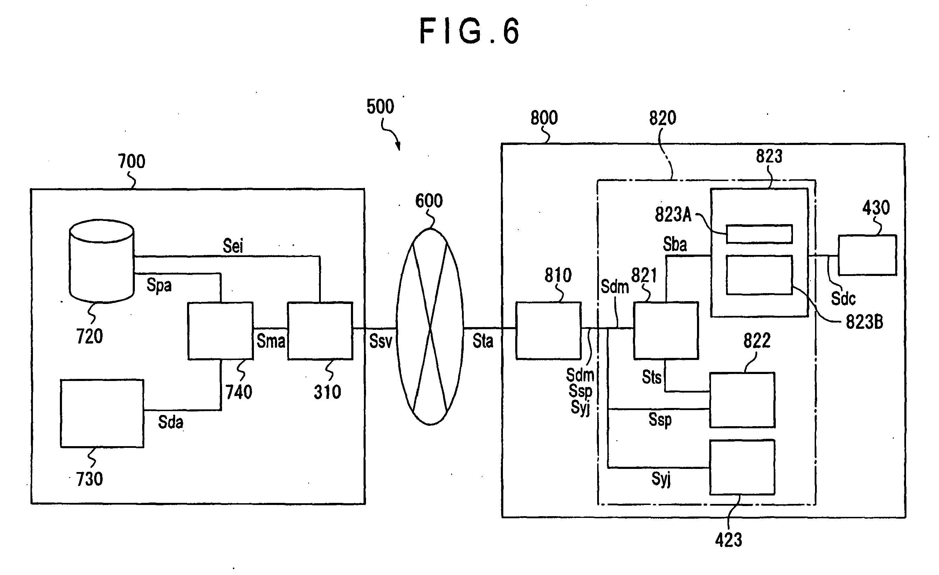

Now, a second embodiment of data sending/receiving system according to the present invention will be described by referring to the related drawings. FIG. 6 is a schematic block diagram of data sending/receiving system according to the second embodiment, showing its configuration. The components same as their counterparts of the first embodiments are denoted respectively by the same reference symbols and will not be described any further. Additionally, the components whose functions are same as or similar to those of their counterparts of the first embodiment will be described only briefly.

### (Configuration of data sending/receiving system)

Referring to FIG. 6, reference symbol 500 denotes a data sending/receiving system that operates as a data processing system. The data sending/receiving system 500 includes a network, which is the Internet 600, a server unit 700 that operates also as a data processing device and a client unit 800 that operates also as a data processing device.

The Internet 600 is a best effort type network and hence is equivalent to the Internet 200 of the first embodiment. Both the server unit 700 and the client unit 800 are connected to it. The maximum transmission speed of the Internet 600 is defined as 10 Mbps here.

The server unit 700 includes an network interface 310, a video packet generator 720, or a data packet generator that also operates as a transmission controller and a speed specifier, a diagnostic packet generator 730 that also operates as a transmission controller and a multiplexer 740 that also operates as a transmission controller.

Like the video packet generator 320 of the first embodiment, the video packet generator 720 divides the video data to be transmitted to generate a plurality of video packets (not shown) having a packet size of, for instance, 1,500 bytes. The video packet generator 720 also receives processing signal Sei from the network interface 310 and recognizes the effective transmission speed described in the processing signal Sei. Then, the video packet generator 720 converts the generated video packets into video packet signal Spa and outputs it to the multiplexer 740 at an output speed lower than the effective transmission speed it recognizes. Each of the video packets generated by the video packet generator 720 has a header, a payload and so on (not shown). The header includes priority information that describes the priority that is referred to when video packets are transmitted by way of the Internet 600 in addition to the information of the header of a video packet generated by the video packet generator 320 of the first embodiment. The priority of video packets described in the priority information is higher than the priority of dummy packets generated by the diagnostic packet generator 730, which will be described hereinafter.

Like the diagnostic packet generator 330 of the first embodiment, the diagnostic packet generator 730 generates dummy packets (not shown) for the purpose of computing the effective transmission speed of the Internet 600. Then, the diagnostic packet generator 730 converts the generated dummy packets into dummy packet Sda and outputs it to the multiplexer 740 at an output speed of 10 Mbps that is equal to the maximum transmission speed of the Internet 600. Note that, unlike video packets, dummy packets do not contain any video data. Each of the dummy packets generated by the diagnostic packet generator 730 has a header and so on (not shown). The header includes priority information in addition to the information of the header of a dummy packet generated by the diagnostic packet generator 330 of the first embodiment. The priority of dummy packets described in the priority information is lower than the above described priority of video packets.

The multiplexer 740 controls the operation of transmitting the video packets along with the dummy packets to the client unit 800 by way of the Internet 600 according to the processing server signal Sma input from the network interface 310. In other words, the multiplexer 740 controls the operation of multiplexing the video packets and the dummy packets and transmitting them typically as shown in FIG. 7 (d) as will be described in greater detail hereinafter. The multiplexer 740 has an output section, a video packet acquiring section, a dummy packet acquiring section, a multiplexer processing section and so on (not shown).

The output section is connected to the network interface 310. The output section outputs video packets and dummy packets to the network interface 310.

The video packet acquiring section is connected to the video packet generator 720. The video packet acquiring section acquires video packets from the video packet generator 720.

The dummy packet acquiring section is connected to the diagnostic packet generator 730. The dummy packet acquiring section acquires dummy packets from the diagnostic packet generator 730.

The multiplexer processing section is connected to the output section, the video packet acquiring section and the dummy packet acquiring section. Upon recognizing a request signal requesting transmission of the video data as described in the processing server signal Sma input from the network interface 310, the multiplexer processing section acquires the video packet signal Spa output from the video packet generator 720 and the dummy packet Sda output from the diagnostic packet generator 730 by the video packet acquiring section and the dummy packet acquiring section. Then, the multiplexer processing section converts the video packets and the dummy packets described in these signals into a processing server signal Sma as transmitted packets (not shown). Then, it transmits the transmitted packets to the network interface 310 by the output section. The transmitted packets are obtained by multiplexing the video packets and the dummy packets. The transmission speed of the transmitted packets is equal to the sum of the output speed of the video packets and that of the dummy packets.

The client unit 800 has a transceiver 810 which is a packet receiver, a computer 820 and a decoder 430 along with an input section, a display and so on (not shown).

The transceiver 810 is connected to the server unit 700 by way of the Internet 600 and also to the computer 820. The transceiver 810 is adapted to receive client connection Sta from the server unit 700 by way of the Internet 600. Upon receiving a client connection Sta from the server unit 700, the transceiver 810 performs a predefined interface input processing operation and outputs a processing client signal Sdm to the computer 820. Additionally, upon receiving at least one of a processing client signal Sdm, a processing signal Ssp and a processing signal Syj from the computer 820, the transceiver 810 performs a predefined interface output processing operation and transmits the processed signal to the server unit 700 by way of the Internet 600 as client connection Sta.

The computer 820 has a demultiplexer 821, a transmission speed estimator 822 that also operates as a speed information generator, a request signal generator 423, a processor 823 and so on. The computer 820 outputs the processing client signal Sdm from the demultiplexer 821, the processing signal Ssp from the transmission speed estimator 822 and the processing signal Syj from the request signal generator 423 to the transceiver 810.

The demultiplexer 821 controls the operation of outputting the transmitted packets described in the processing client signal Sdm input from the transceiver 810 to the transmission speed estimator 822 or the processor 823. Although not shown in the figure, the demultiplexer 821 has an acquiring section, a transmission speed estimator side output section, a processor side output section, a demultiplexer processor, a timer and so on.

The acquiring section is connected to the transceiver 810. It acquires video packets and dummy packets from the transceiver 810.

The transmission speed estimator side output section is connected to the transmission speed estimator 822. The section outputs the video packet and the dummy packets it acquired by the acquiring section to the transmission speed estimator 822.

The processor side output section is connected to the processor 823. The section outputs the video packets acquired by the acquiring section to the processor 823.

The demultiplexer processor is connected to the acquiring section, the transmission speed estimator side output section and the buffer side output section. If the demultiplexer processor recognizes the timing for starting an operation of computing the effective transmission speed from the reading of the timer, it converts the transmitted packets described in the processing client signal Sdm received from the transceiver 810 into a client connection Sta and outputs it to the transmission speed estimator 822. If, on the other hand, the demultiplexer processor recognizes the timing for stopping the operation of computing the effective transmission speed from the reading of the timer, it converts the video packets contained in the transmitted packets described in the processing client signal Sdm into a data packet Sba and outputs it to the processor 823.

The transmission speed estimator 822 computationally determines the effective transmission speed of the Internet 600. More specifically, the transmission speed estimator 822 receives processing signal Sts from the demultiplexer 821. Then, the transmission speed estimator 822 recognizes the transmission speed of transmitted packets and the ratio of the transmitted packets that arrived at the client unit 800 within a predetermined time to the transmitted packets transmitted from the server unit 700 (to be referred to as arriving ratio of the transmitted packets hereinafter) from the information described in the processing signal Sts including the sequence numbers of the video packets and the dummy packets included in the transmitted packets. Then, like the transmission speed estimator 422 of the first embodiment, the transmission speed detector 822 determines the effective transmission speed of the Internet 600 by multiplying the recognized transmission speed and the arriving ratio by each other. Then, the transmission speed detector 822 generates speed information on the determined effective transmission speed and converts it into processing signal Ssp, which is then output to the transceiver 810.

The processor 823 has a memory 823A, a decoder buffer 823B which is in fact a battery of programs stored in the memory 823A and so on. The decoder buffer 823B converts the video packets described in the data packet Sba received from the demultiplexer 821 into processing signal Sdc and outputs it to the decoder 430 in harmony with the processing speed of the decoder 430.

### (Operation of the data sending/receiving system)

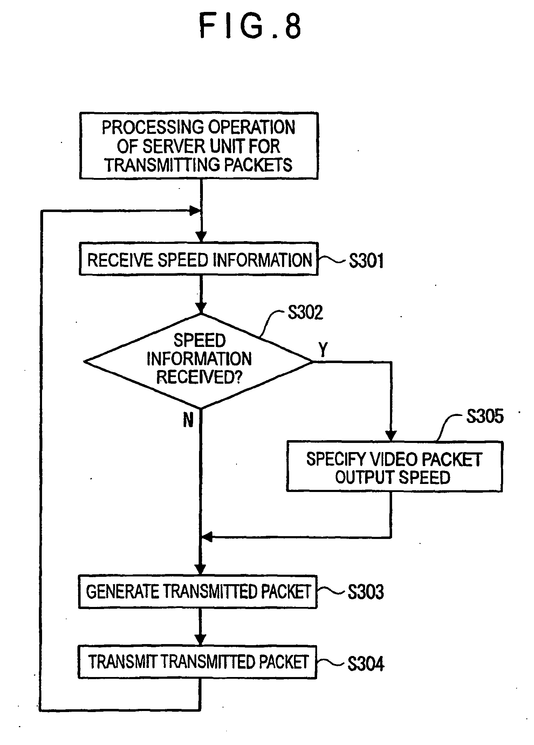

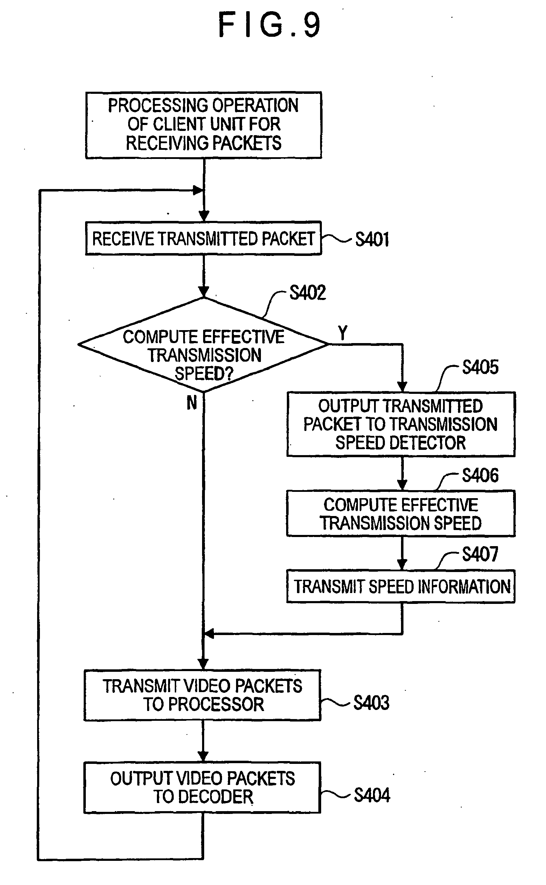

Now, the operation of the data sending/receiving system 500 will be described by referring to FIG. 7, 8 and 9. FIG. 7 is a timing chart of operation of the embodiment of data sending/receiving system 500, in which (a) shows the output of the video packet generator 720, (b) shows the output of the diagnostic packet generator 730, (c) shows the types of transmitted packets sent out from the server unit 700, (d) shows the transmission speeds Vo of transmitted packets sent out from the server unit 700, (e) shows the speeds Vi of transmitted packets arriving at the client unit 800, (f) shows the types of transmitted packets arriving at the client unit 800, (g) shows the output selection of the demultiplexer 821, (h) shows the reception of the processor 823 and (i) shows the reception of the transmission speed detector 822. FIG. 8 is a flow chart of operation of transmitting packets of the server unit 700. FIG. 9 is a flow chart of operation of receiving packets of the client unit 800.

Firstly, a user generates a request signal requesting transmission of video data, operating the input section (not shown) and the request signal generator 423 of the client unit 800, and transmits it to the server unit 700 by way of the Internet 600.

Now, the operation of the server unit 700 at time t0 shown in FIG. 7 will be described by referring to FIG. 8. As the server unit 700 receives the request signal from the client unit 800 at time t0, it performs a processing for receiving speed information (Step S301) and determines if it can receive speed information or not (Step S302). Because server unit 700 cannot receive speed information at this time, it acquires the video packets output from the video packet generator 720 at an output speed of 2 Mbps by the multiplexer 740 and also the dummy packets output from the diagnostic packet generator 730 at an output speed of 10 Mbps. Then, the server unit 700 sends out the acquired video packets and dummy packets as transmitted packets (Step S303) to the client unit 800 by the multiplexer 740 (Step S304). The transmission speed Vo of the transmitted packets sent out from the server unit 700 is the sum of the output speed 2 Mbps of the video packets and the output speed 10 Mbps of the dummy packets, or 12 Mbps, as shown in FIG. 7 (d). Then, the server unit 700 repeats the processing operation from the Steps S301 to S304. Assume that the current effective transmission speed of the Internet is 5 Mbps.

Now, the operation of the client unit 800 at time t1 will be described by referring to FIG. 9. At time t1, the client unit 800 receives the transmitted packets transmitted from the server unit 700 at time t0 (Step S401). Since the transmission speed Vo of the transmitted packets is 12 Mbps and the effective transmission speed of the Internet 600 is 5 Mbps, there will be missing transmitted packets for 7 Mbps on the Internet 600 and the transmission speed Vi of the transmitted packets that arrive at the client unit 800 will be 5 Mbps as shown by the solid lines in FIG. 7 (e). Since the video packets included in the transmitted packets have priority higher than the dummy packets, all the packets that are missing on the Internet 600 are dummy packets and all the video packets arrive at the client unit 800. Thus, video packets for 2 Mbps and dummy packets for 3 Mbps arrive at the client unit 800 as indicated by the solid lines in FIG. 7 (e) so that dummy packets for 7 Mbps become missing on the Internet 600 as indicated by the two-dot chain line in FIG. 7 (e) and the arriving ratio of the video packets is 100%.

Thereafter, the client unit 800 determines if an operation of computing the effective transmission speed is to be performed by the demultiplexer 821 or not on the basis of the reading of the timer (Step S402). The client unit 800 determines that an operation of computing the effective transmission speed is not to be performed by the demultiplexer 821 and outputs the video packets included in the transmitted packets to the processor 823 (Step S403). Then, the processor 823 outputs the video packets by the decoder buffer 823B in harmony with the processing speed of the decoder 430 (Step S404). Thereafter, the client unit 800 repeats the processing operation from the Steps S401 to S404.

Now, the operation of the client unit 800 at time t2 will be described by referring to FIG. 9. At time t2, the client unit 800 receives the transmitted packets transmitted from the server unit 700 in Step S401. Then, it determines that an operation of computing the effective transmission speed is to be performed here and outputs the transmitted packets to the transmission speed detector 822 (Step S405). The transmission speed detector 822 computes the effective transmission speed of the Internet 600 on the basis of the number of transmitted packets received per unit time (Step S406). More specifically, the transmission speed detector 822 recognizes that the transmission speed Vo of the transmitted packets is 12 Mbps from the information contained in the headers of the video packets and the dummy packets included in the transmitted packets that arrive at the client unit 800 and, at the same time, the arriving ratio of the transmitted packets. As pointed out above, since the speed Vi of the transmitted packets arriving at the client unit 800 is 5 Mbps as indicated by the solid lines in FIG. 7 (e), it recognizes that the arriving ratio of the transmitted packets is about 42%. Then, the transmission speed detector 822 determines that the effective transmission speed is 5 Mbps on the basis of the transmission speed Vo of the transmitted packets and the arriving ratio. Thereafter, the transmission speed detector 822 generates speed information on the effective transmission speed and transmits the generated speed information to the server unit 700 (Step S407). Then, after performing the processing operation of the Steps S403 and S404, the client unit 800 repeats the processing operation of the Steps S401 through S407.

At time t3, the client unit 800 receives transmitted packets in the Step S401. Then, it determines to stop the computation of the effective transmission speed in the Step S402 and performs the processing operation of the Steps S403 and S404. Thereafter, the client unit 800 repeats the processing operation of the Steps S401 through S404.

At time t4, the server unit 700 receives in the Step S301 the speed information transmitted from the client unit 800 in the Step S407 and recognizes by the video packet generator 720 the effective transmission speed of the Internet 600 described in the speed information in the Step S302. Then, the video packet generator 720 specifies the output speed of the video packets to be output on the basis of the effective transmission speed (Step S305). Since the effective transmission speed is 5 Mbps here, the video packet output speed is specified to be 4 Mbps that is lower than the effective transmission speed. The server unit 700 performs the processing operation of Steps S303 and S304 by the multiplexer 740. At this time, the transmission speed Vo of the transmitted packets transmitted from the server unit 700 is the sum of the video packet output speed, which is 4 Mbps, and the dummy packet output speed, which is 10 Mbps as shown in FIG. 7 (d), or 14 Mbps. Thereafter, the server unit 700 repeats the processing operation of the Steps S301 through S305.

At time t5, the client unit 800 receives the transmitted packets output at time t4 from the server unit 700 in the Step S401. Since the transmission speed of the transmitted packets is 14 Mbps and the transmission speed of the Internet 600 is 5 Mbps, there will be missing transmitted packets for 9 Mbps on the Internet 600 and the transmission speed Vi of the transmitted packets that arrive at the client unit 800 will be 5 Mbps as shown by the solid lines in FIG. 7 (e). Since the video packets have priority higher than the dummy packets, all the packets that are missing on the Internet 600 are dummy packets and all the video packets arrive at the client unit 800 as in the case of time t1. Thus, video packets for 4 Mbps and dummy packets for 1 Mbps arrive at the client unit 800 as indicated by the solid lines in FIG. 7 (e) so that dummy packets for 9 Mbps become missing on the Internet 600 as indicated by the two-dot chain line in FIG. 7 (e) and the arriving ratio of the video packets is 100%. Then, after performing the processing operation of the Steps S402 through S404, the client unit 800 repeats the processing operation of the Steps S401 through S404. Then, the server unit 700 and the client unit 800 repeat the above described respective processing operations.

### (Effects and advantages of Second embodiment)

As described above, in the second embodiment, the video packet generator 720 of the server unit 700 generates video packets that have high priority when transmitted by way of the Internet 600. The diagnostic packet generator 730 generates dummy packets having priority lower than video packets. As the server unit 700 recognizes a request signal requesting transmission of video data, it transmits both the video packets and the dummy packets as transmitted packets to the client unit 800 by the multiplexer 740 and the Internet 600. The transmission speed Vo of the transmitted packets is the sum of the output speed of the video packets and that of the dummy packets. Then, the server unit 700 acquires speed information on the effective transmission speed of the Internet 600 that is computationally determined on the basis of the volume of the transmitted packets that are missing on the Internet 600. Since the video data included in the transmitted packets has priority higher than the dummy packets, all the missing transmitted packets are dummy packets. In other words, the server unit 700 acquires speed information on the effective transmission speed that is computed on the basis of the volume of the missing dummy packets. Then, the server unit 700 specifies the output speed of video packets by the video packet generator 720 on the basis of the effective transmission speed contained in the speed information and transmits the video packets to the client unit 800 by the multiplexer 740 and the Internet 600 at a speed same as the specified output speed Vo.

With this arrangement, even in a case where video packets are transmitted at the transmission speed Vo at which the arrival ratio of the video packets becomes 100% at the client unit 800, dummy packets are transmitted with the video packets so as to acquire speed information on the effective transmission speed as computed on the basis of the volume of the dummy packets missing on the Internet 600. Thus, it is possible to determine if the effective transmission speed is higher than the video packet transmission speed Vo or not. For example, as described above, when video packets are transmitted at the transmission speed Vo of 2 Mbps at which the video packet arriving ratio at the client unit 800 is 100%, dummy packets are transmitted at the transmission speed Vo of 10 Mbps to make the transmission speed Vo of transmitted packets equal to 12 Mbps. Then, it is possible to recognize that the effective transmission speed is 5 Mbps from the speed information on the effective transmission speed as computed on the basis of the outgoing dummy packets because of a situation where the effective transmission speed is higher than the video packet transmission speed Vo. In this way, the effective transmission speed can be correctly estimated even when the effective transmission speed of the Internet 600 rises remarkably.

Additionally, video packets are transmitted by way of the Internet 600 with priority higher than dummy packets. Therefore, it is possible to reduce the volume of missing video packets on the Internet.

Still additionally, the server unit 700 specifies the transmission speed Vo at which it transmits video packets to the client unit 800 by the video packet generator 720 and the multiplexer 740 on the basis of the effective transmission speed described in the acquired speed information. Therefore, as in the case of the first embodiment, the image and sound that are provided to the user are relatively free from problems such as interruptions and disturbances. Additionally, the idle time of the Internet 600 is reduced to effectively exploit the Internet 600.

The client unit 800 receives video packets that are generated by dividing video data and dummy packets having priority lower than video packets when transmitted by way of the Internet 600, both the video packets and the dummy packets being transmitted simultaneously as transmitted packets by way of the Internet 600. Then, the client unit 800 recognizes the transmitted packet transmission speed Vo by the transmission speed detector 822 and also the arriving ratio of the transmitted packets that is determined on the basis of the volume of the transmitted packets missing on the Internet 600. Because the video data included in the transmitted packets has priority higher than the dummy packets, all the missing transmitted packets are dummy packets. In other words, the client unit 800 recognizes the arriving ratio of the transmitted packets on the basis of the volume of the missing dummy packets. Then, the transmission speed detector 822 computes the effective transmission speed of the Internet 600 from the transmission speed Vo and the arriving ratio it recognizes and subsequently generates and transmits speed information on the effective transmission speed to the server unit 700 by way of the Internet 600.

With the above described arrangement, even when the client unit 800 receives video packets that are transmitted at the transmission speed Vo that makes the arriving ratio equal to 100%, the transmission speed detector 822 computes the effective transmission speed on the basis of the transmitted packets including both video data and dummy data so that it is possible to determine if the effective transmission speed is higher than the video packet transmission speed Vo or not. Therefore, it is possible to correctly estimate the effective transmission speed of the Internet 600 even when the effective transmission speed rises unexpectedly.

The transmission speed detector 822 computes the effective transmission speed on the basis of the volume of the dummy packets missing on the Internet 600 and dummy packets do not contain any video data. Therefore, it is possible to reduce the volume of video data missing on the Internet 600 that is attributable to the computation of the effective transmission speed.

The server unit 700 generates video packets having high priority when transmitted by way of the Internet 600 at the video packet generator 720 and dummy packets having priority lower than video packets at the diagnostic packet generator 730. When the server unit 700 recognizes request information requesting transmission of video data, it transmits the video packets along with the dummy packets to the client unit 800 as transmitted packets. The transmission speed Vo of the transmitted packets is equal to the sum of the video packet output speed and the dummy packet output speed. Upon receiving the transmitted packets, the client unit 800 computes the effective transmission speed of the Internet 600 on the basis of the volume of the transmitted packets missing on the Internet 600 as described above. Since the video data included in the transmitted packets has priority higher than the dummy packets, all the missing transmitted packets are dummy packets. In other words, the client unit 800 computes the effective transmission speed on the basis of the volume of the missing dummy packets. Then, the client unit 800 generates speed information on the effective transmission speed and transmits it to the server unit 700 by way of the Intemet 600. As the server unit 700 acquires the speed information, it specifies the output speed of the video packets on the basis of the effective transmission speed as described above and transmits the video packets and the dummy packets to the client unit 800 by way of the Internet 600 as transmitted packets.

With the above described arrangement, even when the client unit 800 receives video packets that are transmitted at the transmission speed Vo that makes the arriving ratio equal to 100%, the transmission speed detector 822 computes the effective transmission speed, using transmission speed Vo of the transmitted packets that is higher than the transmission speed Vo of the video packets alone so that it is possible to determine if the video packet transmission speed Vo agrees with the transmission speed of the Internet 600 or the transmission speed of the Internet 600 is higher than the video packet transmission speed Vo. Therefore, it is possible to correctly compute the effective transmission speed of the Internet 600 even when the effective transmission speed rises unexpectedly.

Additionally, video packets are made to have priority higher than dummy packets when they are transmitted by way of the Internet 600. Therefore, it is possible to reduce the volume of missing video packets on the Internet 600.

Furthermore, the server unit 700 uses the video packet generator 720 and the multiplexer 740 to specify the video packet transmission speed Vo at which it transmits the video packets to the client unit 800 and that is computed by the transmission speed detector 822 on the basis of the effective transmission speed. Thus, the image and sound that are provided to the user are relatively free from problems such as interruptions and disturbances and the Internet 600 can be exploited effectively as in the case of the first embodiment.

Furthermore, 10 Mbps is specified for the dummy packet transmission speed Vo that is higher than the effective transmission speed of the Internet 600. Therefore, the transmission speed Vo of the transmitted packets transmitted from the server unit 700 is always higher than the effective transmission speed of the Internet 600 and hence the arriving ratio of the dummy packets is always short of 100%. Thus, the effective transmission speed of the Internet 600 can be determined reliably.

Still additionally, it is so arranged that a value smaller than the effective transmission speed of the Internet 600 as determined by the transmission speed detector 822 is specified for the video packet transmission speed Vo. Therefore, the volume of missing video packets on the Internet 600 can be minimized as in the case of the first embodiment.

Unlike the multiplexer 340 of the first embodiment that is adapted to select the type of the packets to be transmitted according to the packet request signal it recognizes, the multiplexer 740 of the server unit 700 outputs both video packets and dummy packets to the network interface 310 as transmitted packets. Thus, it is not necessary to provide an buffer fullness detector 426B for the purpose of generating packet request signals. Therefore, the client unit 800 can be made to have a configuration simpler than the client unit 400 of the first embodiment.

Finally, since the data sending/receiving system 500 including the server unit 700 and the client unit 800 is adapted to transmit and receive data by way of the Internet 600 that is a best effort type network, the embodiment maximally provides the above described advantages.

### [Other Embodiments]

The present invention is by no means limited to the above-described embodiment, which may be modified or altered in various different ways without departing from the scope of the present invention.

More specifically, while a packet generator and a diagnostic packet generator are provided separately in each of the above-described embodiments, they may be put together into a transmitted packet generator.
While each of the above-described embodiments transmits video packets in response to a request signal generated by the request signal generator 423 of the client unit 400 or 800, it may alternatively be so arranged that the operator in charge of the server unit 300 or 700, whichever appropriate, actively transmits video packets to the client unit 400 or 800.

While the embodiments are applied to data sending/receiving systems 100 and 500 realized respectively by using best effort type networks 200 and 600 in the above description, the present invention is by no means limited thereto and a guarantee type network may alternatively be used.

While video packets and dummy packets are transmitted to the client unit 400 on a time division basis by means of a switch provided at the multiplexer 340 in the above-described first embodiment, the switch may be replaced by some other section.

While video packets are transmitted first when the server unit 300 recognizes a request signal requesting transmission of video data in the first embodiment, dummy packets may alternatively be transmitted first. With this arrangement, the client unit 400 can compute the effective transmission speed of the Internet 200 before the server unit 300 transmits video packets. Then, the server unit 300 can specify the video packet transmission speed first on the basis of the computed effective transmission speed so that the volume of missing video packets on the Internet 200 can be reliably minimized.

While the type of packets to be transmitted is selected according to the received packet request signal and video packets and dummy packets are transmitted to the client unit 400 on a time division basis in the first embodiment, alternatively, the server unit 300 may be provided with a timer (not shown) and the type of packets to be transmitted may be switched from one to the other by the timer.

While the transmission speed Vo of dummy packets is 10 Mbps in the first embodiment, some other speed that is faster than the video packet transmission speed may alternatively be selected. Furthermore, while the dummy packet transmission speed Vo is constantly held to 10 Mbps. The transmission speed Vo may alternatively be made to vary without falling below the video packet transmission speed.

As in the second embodiment, the video packets generated by the video packet generator 320 and the diagnostic packet generator 330 may be provided with priority information in the first embodiment. With this arrangement, video packets are transmitted from the server unit 300 with priority even when the Internet 200 is with a high load factor. Then, the volume of missing video packets on the Internet 200 can be reliably minimized.

While the transmission speed Vo of dummy packets is 10 Mbps in the second embodiment, some other speed may alternatively be selected. Furthermore, while the dummy packet transmission speed Vo is constantly held to 10 Mbps in the second embodiment, the transmission speed Vo may alternatively be made to vary. For example, the dummy packet transmission speed Vo may be made variable as a function of the video packet transmission speed Vo in such a way that the transmission speed Vo of transmitted packets that include video packets and dummy packets is always held to 10 Mbps that is equal to the maximum transmission speed of the Internet 600.

The second embodiment may be so arranged as to always compute the effective transmission speed of the Internet 600.

The client units 400 and 800 are provided with respective transceivers 410 and 810 in the above-described first and second embodiments, the transceivers 410 and 810 may be separated respectively from the client units 400 and 800 and mobile phones or PHSs may be used for the transceivers 410 and 810 and wirelessly connected to the client units 400 and 800 to reliably transmit/receive data.

The specific configurations and the procedures of operation of the embodiments may be modified appropriately without departing from the scope of the present invention.

### [Effects and Advantages of Other Embodiments]

With any of the above-described modifications to the embodiments, the server unit 300 generates video packets by dividing video data by the video packet generator 320 and also generates dummy packets by the diagnostic packet generator 330 for the purpose of computing the effective transmission speed of the Internet 200. Upon recognizing a request signal requesting transmission of video data, the server unit 300 transmits the video packets and the dummy packets to the client unit 400 by the multiplexer 340 on a time division basis so as to transmit the dummy packets at a transmission speed Vo higher than the transmission speed of the video packets. Then, the server unit 300 acquires speed information on the effective transmission speed of the Internet 200 that is computed on the basis of the volume of the dummy packets missing on the Internet 200. Then, the server unit 300 specifies the output speed of the video packets by the video packet generator 320 on the basis of the effective transmission speed contained in the speed information and transmits the video packets to the client unit 400 by the multiplexer 340 and the Internet 200 at a transmission speed Vo that is equal to the specified output speed.

Therefore, even when the video packets are transmitted at a transmission speed Vo that makes the arrival ratio of the video packet equal to 100% at the client unit 400, the dummy packets are transmitted at a speed higher than the video packet transmission speed to acquire speed information on the effective transmission speed of the Internet 200 on the basis of the volume of the dummy packets missing on the Internet 200 so that it is possible to determine if there is a situation where the effective transmission speed is higher than the video packet transmission speed Vo or not. Thus, it is possible to accurately estimate the effective transmission speed of the Internet 200 even when the effective transmission speed rises unexpectedly. Additionally, the effective transmission speed is computationally determined on the basis of the volume of the dummy packets missing on the Internet 200 and dummy packets do not contain any video data. Therefore, it is possible to minimize the volume of video data missing on the Internet 200 that is attributable to the computation of the effective transmission speed. Furthermore, the server unit 300 specifies the transmission speed Vo of the video packets to be transmitted to the client unit 400 by the video packet generator 320 and the multiplexer 340 according to the effective transmission speed described in the acquired speed information. Therefore, the server unit 300 transmits video packets at a transmission speed Vo that reflects the effective transmission speed of the Internet 200 so that the volume of missing video packets on the Internet 200 can be reliably minimized and the image and sound that are provided to the user are relatively free from problems such as interruptions and disturbances. Additionally, the idle time of the Internet 200 is reduced to effectively exploit the Internet 200.

In the other embodiments, the server unit 700 generates video packets by the video packet generator 720 and also dummy packets by the diagnostic packet generator 730 in such a way that the video packets have priority relative to the dummy packets when transmitted by way of the Internet 600. Upon recognizing request information requesting transmission of video data, the server unit 700 transmits both the video packets and the dummy packets to the client unit 800 by the multiplexer 740 and the Internet 600 as transmitted packets. The transmission speed Vo of the transmitted packets is equal to the sum of the output speed of the video packets and that of the dummy packets. Then, the server unit 700 acquires speed information on the effective transmission speed of the Internet 600 that is determined on the basis of the volume of the transmitted packets missing on the Internet 600. Since the video data included in the transmitted packets have priority relative to the dummy packets, all the missing transmitted packets are dummy packets. In other words, the speed information contains the effective transmission speed that is computationally determined on the basis of the missing dummy packets. Then, the server unit 700 specifies the output speed of the video packets on the basis of the effective transmission speed contained in the speed information by the video packet generator 720 and transmits the video packets to the client unit 800 by the multiplexer 740 and the Internet 600 at the transmission speed Vo that is equal to the specified output speed.

With the arrangement, even when the video packets are transmitted at a transmission speed Vo that makes the arrival ratio of the video packet equal to 100% at the client unit 800, the video packets and the dummy packets are transmitted as transmitted packets to acquire speed information on the effective transmission speed as computed on the basis of the volume of the dummy packets included in the transmitted packets and missing on the Internet 600 so that it is possible to determine if there is a situation where the effective transmission speed is higher than the video packet transmission speed Vo or not. Thus, it is possible to accurately estimate the effective transmission speed of the Internet 600 even when the effective transmission speed rises unexpectedly. Additionally, the video packets are given priority higher than the dummy packets when transmitted by way of the Internet 600. Therefore, the volume of missing video packets on the Internet 600 can be reliably minimized. Furthermore, the server unit 700 specifies the transmission speed Vo of the video packets to be transmitted to the client unit 800 by the video packet generator 720 and the multiplexer 740 according to the effective transmission speed described in the acquired speed information. Therefore, the server unit 700 transmits video packets at a transmission speed Vo that reflects the effective transmission speed of the Internet 600 so that the volume of missing video packets on the Internet 600 can be reliably minimized and the image and sound that are provided to the user are relatively free from problems such as interruptions and disturbances. Additionally, the idle time of the Internet 600 is reduced to effectively exploit the Internet 600.

## Claims

1. A data processing device for transmitting data by way of a network, the device comprising:
a data packet generator for generating data packets by dividing the data;
a diagnostic packet generator for generating dummy packets to be used for computing an effective transmission speed of the network;
a transmission controller for transmitting the data packets and the dummy packets by way of the network on a time division basis so as to transmit the dummy packets at a transmission speed higher than a transmission speed of the data packets by acquiring and recognizing a request signal requesting transmission of the data; and
a speed specifier for acquiring speed information on the effective transmission speed as computed on the basis of the volume of the dummy packets missing on the network after the transmission by the transmission controller and for specifying the transmission speed of the data packets transmitted by the transmission controller on the basis of the acquired speed information.

2. The device according to claim 1, wherein the transmission controller has a switch for selecting either the data packets or the dummy packets when transmitting the data packets and the dummy packets by way of the network on a time division basis.

3. The device according to claim 1 or 2, wherein the transmission controller is adapted to transmit the dummy packets first when it recognizes a request signal.

4. A device according to any one of claims 1 through 3, wherein
the dummy packets have priority information on priority lower than priority of the data packets for transmission by way of the network.

5. A data processing device for transmitting data by way of a network, the device comprising:
a data packet generator for generating data packets by dividing the data;
a diagnostic packet generator for generating dummy packets having priority information on priority lower than priority of the data packets for transmission by way of the network;
a transmission controller for transmitting the dummy packets along with the data packets by way of the network by acquiring and recognizing a request signal requesting transmission of the data; and
a speed specifier for acquiring speed information on an effective transmission speed by way of the network as computed on the basis of the volume of the dummy packets missing on the network after the transmission by the transmission controller and for specifying a transmission speed of the data packets transmitted by the transmission controller on the basis of the acquired speed information.

6. The device according to any one of claims 1 through 5, wherein
the transmission controller is adapted to transmit the dummy packets by way of the network at a transmission speed higher than the effective transmission speed of the network.

7. The device according to any one of claims 1 through 6, wherein
the speed specifier is adapted to specify a transmission speed lower than the effective transmission speed contained in the speed information for the data packets.

8. A data processing device for receiving data by way of a network, the device comprising:
a packet receiver for receiving data packets formed by dividing the data and dummy packets to be used for computing an effective transmission speed of the network, the data packets and the dummy packets being transmitted by way of the network on a time division basis;
a transmission speed detector for recognizing the volume of the dummy packets missing on the network and relating to the dummy packets received by the packet receiver and computing the effective transmission speed of the network on the basis of the recognized volume of the missing dummy packets; and
a speed information generator for generating speed information on the effective transmission speed as computed by the transmission speed detector and transmitting the generated speed information by way of the network.

9. The device according to claim 8, further comprising:
a buffer for temporary storing the data packets received by the packet receiver; and
an buffer fullness detector for recognizing the volume of the accumulated data packets accumulated in the buffer, generating a packet request signal requesting transmission of the dummy packets when the recognized volume of the accumulated packets exceeds a predetermined part of the capacity of the buffer but generating a data packet request signal requesting transmission of the data packets when the recognized volume of the accumulated packets does not reach the predetermined part of the capacity of the buffer and transmitting the generated packet request signal by way of the network.

10. The device according to claim 9, further comprising:
an output controller for recognizing the type of the packets received by the packet receiver and outputting the data packets to the buffer when the recognized packets are data packets but outputting the dummy packets to the transmission speed detector when the recognized packets are dummy packets.

11. A device according to claim 10, wherein the output controller has a switch for outputting the packets received by the packet receiver either to the buffer or to the transmission speed detector.

12. A device according to any one of claims 8 through 11, wherein the dummy packets have priority information on priority lower than the priority of the data packets for transmission by way of the network.

13. A data processing device for receiving data by way of a network, the device comprising:
a packet receiver for receiving data packets formed by dividing data and dummy packets having priority information on priority lower than priority of the data packets for transmission by way of the network, the data packets and the dummy packets being transmitted by way of the network simultaneously;
a transmission speed detector for recognizing the volume of the dummy packets missing on the network and relating to the dummy packets received by the packet receiver and computing an effective transmission speed of the network on the basis of the recognized volume of the missing dummy packets; and
a speed information generator for generating speed information on the effective transmission speed as computed by the transmission speed detector and for transmitting the generated speed information by way of the network.

14. A data processing system comprising:
the data processing device according to any one of claims 1 through 7; and
a client unit connected to the data processing device by way of a network so as to be able to transmit data to and receive data from the data processing device and having a packet receiver for receiving the data packets and the dummy packets transmitted by way of the network, a transmission speed detector for computing the effective transmission speed and a speed information generator for generating speed information on the basis of the effective transmission speed computed by the transmission speed detector and transmitting the speed information to the data processing device by way of the network.

15. A data processing system comprising:
the data processing device according to any one of claims 8 through 12; and
a server unit connected to the data processing device by way of a network so as to be able to transmit data to and receive data from the data processing device and having a data packet generator for generating data packets, a diagnostic packet generator for generating dummy packets, a transmission controller for transmitting the data packets and the dummy packets by way of the network on a time division basis at respective transmission speeds, the transmission speed of the dummy packets being higher than the transmission speed of the data packets, by acquiring and recognizing the request signal transmitted by way of the network and a speed specifier for acquiring the speed information and specifying the transmission speed of the data packets to be transmitted by the transmission controller on the basis of the acquired speed information.

16. A data processing system comprising:
the data processing device according to claim 13; and
a server unit connected to the data processing device by way of a network so as to be able to transmit data to and receive data from the data processing device and having a data packet generator for generating data packets, a diagnostic packet generator for generating dummy packets, a transmission controller for transmitting the data packets and the dummy packets by way of the network simultaneously by acquiring and recognizing the request signal transmitted by way of the network and a speed specifier for acquiring the speed information and specifying the transmission speed of the data packets to be transmitted by the transmission controller on the basis of the acquired speed information.

17. A data processing system for transmitting data from a server unit having data to a client unit connected to the server unit by way of a network so as to be able to transmit/receive various pieces of information,
the server unit comprising:
a data packet generator for generating data packets by dividing data;
a diagnostic packet generator for generating dummy packets to be used for computing an effective transmission speed of the network;
a transmission controller for transmitting the data packets and the dummy packets on a time division basis so as to transmit the dummy packets at a transmission speed higher than a transmission speed of the data packets by acquiring and recognizing a request signal requesting transmission of the data; and
a speed specifier for acquiring speed information on the effective transmission speed from the client unit by way of the network and for specifying the transmission speed of the data packets transmitted by the transmission controller on the basis of the acquired speed information;
the client unit comprising:
a packet receiver for receiving the data packets and the dummy packet from the server unit by way of the network;
a transmission speed detector for recognizing the volume of the dummy packets missing on the network and relating to the dummy packets received by the packet receiver and computing the effective transmission speed of the network on the basis of the recognized volume of the missing dummy packets; and
a speed information generator for generating speed information on the effective transmission speed as computed by the transmission speed detector and transmitting the generated speed information to the server unit by way of the network.

18. A data processing system for transmitting data from a server unit having data to a client unit connected to the server unit by way of a network so as to be able to transmit/receive various pieces of information,
the server unit comprising:
a data packet generator for generating data packets by dividing data;
a diagnostic packet generator for generating dummy packets having priority information on priority lower than priority of the data packets for transmission by way of the network;
a transmission controller for transmitting the dummy packets along with the data packets by acquiring and recognizing a request signal requesting transmission of the data to the client unit by way of the network; and
a speed specifier for acquiring speed information on the effective transmission speed from the client unit by way of the network and for specifying a transmission speed of the data packets transmitted by the transmission controller on the basis of the acquired speed information;
the client unit comprising:
a packet receiver for receiving the data packets and the dummy packet;
a transmission speed detector for recognizing the volume of the dummy packets missing on the network and relating to the dummy packets received by the packet receiver and computing the effective transmission speed of the network on the basis of the recognized volume of the missing dummy packets; and
a speed information generator for generating speed information on the effective transmission speed as computed by the transmission speed detector and transmitting the generated speed information to the server unit by way of the network.

19. A data processing method of processing data to be transmitted by way of a network by a computer, the method comprising the steps of:
generating data packets by dividing data and generating dummy packets to be used for computing an effective transmission speed of the network;
transmitting the data packets and the dummy packets by way of the network on a time division basis so as to transmit the dummy packets at a transmission speed higher than a transmission speed of the data packets by acquiring and recognizing a request signal requesting transmission of the data;
acquiring speed information on the effective transmission speed as computed on the basis of the volume of the dummy packets missing on the network after the transmission, by way of the network;
specifying the transmission speed of the data packets on the basis of the acquired speed information; and
transmitting the data packets by way of the network at the specified transmission speed.

20. A data processing method of processing data to be transmitted by way of a network by a computer, the method comprising the steps of:
generating data packets by dividing data and generating dummy packets having priority information on priority lower than priority of the data packets for transmission by way of the network;
transmitting the dummy packets along with the data packets by way of the network by acquiring and recognizing a request signal requesting transmission of the data;
acquiring speed information on an effective transmission speed as computed on the basis of the volume of the dummy packets missing on the network after the transmission, by way of the network;
specifying a transmission speed of the data packets on the basis of the acquired speed information; and
transmitting the data packets by way of the network at the specified transmission speed.

21. A data processing method of processing data to be received by way of a network by a computer, the method comprising the steps of:
receiving data packets formed by dividing data and dummy packets to be used for computing an effective transmission speed of the network, the data packets and the dummy packets being transmitted by way of the network on a time division basis;
recognizing the volume of the dummy packets missing on the network and relating to the received dummy packets;
computing the effective transmission speed of the network on the basis of the recognized volume of the missing dummy packets;
generating speed information on the computed effective transmission speed; and
transmitting the generated speed information by way of the network.

22. A data processing method of processing data to be received by way of a network by a computer, the method comprising the steps of:
receiving data packets formed by dividing data and dummy packets having priority information on priority lower than priority of the data packets for transmission by way of the network, the data packets and the dummy packets being transmitted simultaneously;
recognizing the volume of the dummy packets missing on the network and relating to the received dummy packets;
computing an effective transmission speed of the network on the basis of the recognized volume of the missing dummy packets;
generating speed information on the computed effective transmission speed; and
transmitting the generated speed information by way of the network.

23. A recording medium storing a data processing program executing the data processing method according to any one of claims 19 through 22 by a computer when said program is run on a computer.

## Patentansprüche

1. Datenverarbeitungsvorrichtung zum Senden von Daten über ein Netzwerk, wobei die Vorrichtung umfasst:
eine Datenpaket-Erzeugungseinrichtung zum Erzeugen von Datenpaketen durch Teilen der Daten;
eine Diagnosepaket-Erzeugungseinrichtung zum Erzeugen von Blindpaketen, die zum Berechnen einer effektiven Sendegeschwindigkeit des Netzwerkes zu verwenden sind;
eine Sende-Steuereinheit, die die Datenpakete und die Blindpakete über das Netzwerk auf einer Zeitteilbasis so sendet, dass sie die Blindpakete mit einer Sendegeschwindigkeit sendet, die höher ist als eine Sendegeschwindigkeit der Datenpakete, indem sie ein Anforderungssignal erfasst und erkennt, das Senden der Daten anfordert;
eine Geschwindigkeits-Spezifizierungseinrichtung, die Geschwindigkeits-Informationen über die effektive Sendegeschwindigkeit, berechnet auf Basis des Volumens der Blindpakete, erfasst, die in dem Netzwerk nach dem Senden durch die Sende-Steuereinheit fehlen, und die Sendegeschwindigkeit der durch die Sende-Steuereinheit gesendeten Datenpakete auf Basis der erfassten Geschwindigkeits-Informationen spezifiziert.

2. Vorrichtung nach Anspruch 1, wobei die Sende-Steuereinrichtung einen Switch aufweist, mit dem entweder die Datenpakete oder die Blindpakete ausgewählt werden, wenn die Datenpakete und die Blindpakete auf einer Zeitteilbasis über das Netzwerk gesendet werden.

3. Vorrichtung nach Anspruch 1 oder 2, wobei die Sende-Steuereinheit so eingerichtet ist, dass sie die Blindpakete zuerst sendet, wenn sie ein Anforderungssignal erkennt.

4. Vorrichtung nach einem der Ansprüche 1 bis 3, wobei
die Blindpakete Prioritätsinformationen über Priorität aufweisen, die niedriger ist als die Priorität der Datenpakete zum Senden über das Netzwerk.

5. Datenverarbeitungsvorrichtung zum Senden von Daten über ein Netzwerk, wobei die Vorrichtung umfasst:
eine Datenpaket-Erzeugungseinrichtung zum Erzeugen von Datenpaketen durch Teilen der Daten;
eine Diagnosepaket-Erzeugungseinrichtung zum Erzeugen von Blindpaketen mit Prioritätsinformationen über Priorität, die niedriger ist als Priorität der Datenpakete zum Senden über das Netzwerk;
eine Sende-Steuereinheit, die die Blindpakete zusammen mit den Datenpaketen über das Netzwerk sendet, indem sie ein Anforderungssignal erfasst und erkennt, das Senden der Daten anfordert; und
eine Geschwindigkeits-Spezifizierungseinrichtung, die Geschwindigkeits-Informationen über eine effektive Sendegeschwindigkeit über das Netzwerk, berechnet auf Basis des Volumens der Blindpakete erfasst, die in dem Netzwerk nach dem Senden durch die Sende-Steuereinheit fehlen, und eine Sendegeschwindigkeit der durch die Sende-Steuereinheit gesendeten Datenpakete auf Basis der erfassten Geschwindigkeits-Informationen spezifiziert.

6. Vorrichtung nach einem der Ansprüche 1 bis 5, wobei
die Sende-Steuereinheit so eingerichtet ist, dass sie die Blindpakete über das Netzwerk bei einer Sendegeschwindigkeit sendet, die höher ist als die effektive Sendegeschwindigkeit des Netzwerks.

7. Vorrichtung nach einem der Ansprüche 1 bis 6, wobei
die Geschwindigkeits-Spezifizierungseinrichtung so eingerichtet ist, dass sie eine Sendegeschwindigkeit spezifiziert, die niedriger ist als die effektive Sendegeschwindigkeit, die in den Geschwindigkeits-Informationen für die Datenpakete enthalten ist.

8. Datenverarbeitungsvorrichtung zum Empfangen von Daten über ein Netzwerk, wobei die Vorrichtung umfasst:
eine Paket-Empfangseinrichtung zum Empfangen von Datenpaketen, die durch Teilen der Pakete erzeugt werden, und von Blindpaketen, die zum Berechnen einer effektiven Sendegeschwindigkeit des Netzwerks zu verwenden sind, wobei die Datenpakete und die Blindpakete auf einer Zeitteilbasis über das Netzwerk gesendet werden;
einen Sendegeschwindigkeits-Detektor, der das Volumen der in dem Netzwerk fehlenden Blinkpakete erkennt und auf die durch die Paket-Empfangseinrichtung empfangenen Blindpakete bezieht und die effektive Sendegeschwindigkeit des Netzwerks auf Basis des erkannten Volumens der fehlenden Blindpakete berechnet; und
eine Geschwindigkeits-Informations-Erzeugungseinrichtung zum Erzeugen von Geschwindigkeits-Informationen über die durch den Sendegeschwindigkeits-Detektor berechnete effektive Sendegeschwindigkeit und zum Senden der erzeugten Geschwindigkeits-Informationen über das Netzwerk.

9. Vorrichtung nach Anspruch 8, die des Weiteren umfasst:
einen Puffer zum temporären Speichern der durch die Paket-Empfangseinrichtung empfangenen Datenpakete;
und
ein Puffer-Voll-Detektor, der das in dem Puffer akkumulierte Volumen akkumulierter Datenpakete erkennt, ein Paket-Anforderungssignal erzeugt, das Senden der Blindpakete anfordert, wenn das erkannte Volumen der akkumulierten Pakete einen vorgegebenen Teil der Kapazität des Puffers übersteigt, jedoch ein Datenpaket-Anforderungssignal erzeugt, das Senden der Datenpakete anfordert, wenn das erkannte Volumen der akkumulierten Datenpakete den vorgegebenen Teil der Kapazität des Puffers nicht erreicht, und das erzeugte Paket-Anforderungssignal über das Netzwerk sendet.

10. Vorrichtung nach Anspruch 9, die des Weiteren umfasst:
eine Ausgabe-Steuereinheit, die den Typ der durch die Paket-Empfangseinrichtung empfangenen Pakete erkennt und die Datenpakete an den Puffer ausgibt, wenn die erkannten Pakete Datenpakete sind, die Blindpakete jedoch an den Sendegeschwindigkeits-Detektor ausgibt, wenn die erkannten Pakete Blindpakete sind.

11. Vorrichtung nach Anspruch 10, wobei die Ausgabe-Steuereinheit einen Switch zum Ausgeben der durch die Paket-Empfangseinrichtung empfangenen Pakete entweder an den Puffer oder an den Sendegeschwindigkeits-Detektor aufweist.

12. Vorrichtung nach einem der Ansprüche 8 bis 11, wobei die Blindpakete Prioritätsinformationen über Priorität aufweisen, die niedriger ist als die Priorität der Datenpakete zum Senden über das Netzwerk.

13. Datenverarbeitungsvorrichtung zum Empfangen von Daten über ein Netzwerk, wobei die Vorrichtung umfasst:
eine Paket-Empfangseinrichtung zum Empfangen von Datenpaketen, die durch Teilen von Daten erzeugt werden, und Blindpaketen, die Prioritätsinformationen über Priorität aufweisen, die niedriger ist als Priorität der Datenpakete zum Senden über das Netzwerk, wobei die Datenpakete und die Blindpakete simultan über das Netzwerk gesendet werden; Netzwerk gesendet werden;
einen Sendegeschwindigkeits-Detektor, der das Volumen der in dem Netzwerk fehlenden Blindpakete erkennt und auf die durch die Paket-Empfangseinrichtung empfangenen Blindpakete bezieht und eine effektive Sendegeschwindigkeit des Netzwerks auf Basis des erkannten Volumens der fehlenden Blindpakete berechnet; und
eine Geschwindigkeits-Informations-Erzeugungseinrichtung zum Erzeugen von Geschwindigkeits-Informationen über die durch den Sendegeschwindigkeits-Detektor berechnete effektive Sendegeschwindigkeit und zum Senden der erzeugten Geschwindigkeits-Informationen über das Netzwerk.

14. Datenverarbeitungssystem, das umfasst:
die Datenverarbeitungsvorrichtung nach einem der Ansprüche 1 bis 7; und
eine Client-Einheit, die mit der Datenverarbeitungsvorrichtung über ein Netzwerk so verbunden ist, dass sie Daten zu der Datenverarbeitungsvorrichtung senden und Daten von ihr empfangen kann, und die eine Paket-Empfangseinrichtung zum Empfangen der über das Netzwerk gesendeten Datenpakete und Blindpakete, einen Sendegeschwindigkeits-Detektor zum Berechnen der effektiven Sendegeschwindigkeit sowie eine Geschwindigkeits-Informations-Erzeugungseinrichtung zum Erzeugen von Geschwindigkeits-Informationen auf Basis der durch den Sendegeschwindigkeits-Detektor berechneten effektiven Sendegeschwindigkeit und zum Senden der Geschwindigkeits-Informationen zu der Datenverarbeitungsvorrichtung über das Netzwerk aufweist.

15. Datenverarbeitungssystem, das umfasst:
die Datenverarbeitungsvorrichtung nach einem der Ansprüche 8 bis 12; und
eine Server-Einheit, die mit der Datenverarbeitungsvorrichtung über ein Netzwerk so verbunden ist, dass sie Daten zu der Datenverarbeitungsvorrichtung senden und Daten von ihr empfangen kann, und die eine Datenpaket-Erzeugungseinrichtung zum Erzeugen von Datenpaketen, eine Diagnosepaket-Erzeugungseinrichtung zum Erzeugen von Blindpaketen, eine Sende-Steuereinheit, die die Datenpakete und die Blindpakete über das Netzwerk auf einer Zeitteilbasis bei jeweiligen Sendegeschwindigkeiten sendet, indem sie das Anforderungssignal, das über das Netzwerk gesendet wird, erfasst und erkennt, wobei die Sendegeschwindigkeit der Blindpakete höher ist als die Sendegeschwindigkeit der Datenpakete, sowie eine Geschwindigkeits-Spezifizierungseinrichtung aufweist, die die Geschwindigkeits-Informationen erfasst und die Sendegeschwindigkeit der durch die Sende-Steuereinheit zu sendenden Datenpakete auf Basis der erfassten Geschwindigkeits-Informationen spezifiziert.

16. Datenverarbeitungssystem, das umfasst:
die Datenverarbeitungsvorrichtung nach Anspruch 13; und
eine Server-Einheit, die mit der Datenverarbeitungsvorrichtung über ein Netzwerk so verbunden ist, dass sie Daten zu der Datenverarbeitungsvorrichtung senden und von ihr empfangen kann, und die eine Datenpaket-Erzeugungseinrichtung zum Erzeugen von Datenpaketen, eine Diagnosepaket-Erzeugungseinrichtung zum Erzeugen von Blindpaketen, eine Sende-Steuereinheit, die die Datenpakete und die Blindpakete simultan über das Netzwerk sendet, indem sie das über das Netzwerk gesendete Anforderungssignal erfasst und erkennt, und eine Geschwindigkeits-Spezifzierungseinrichtung aufweist, die die Geschwindigkeits-Informationen erfasst und die Sendegeschwindigkeit der durch die Sende-Steuereinheit zu sendenden Datenpakete auf Basis der erfassten Geschwindigkeits-Informationen spezifiziert.

17. Datenverarbeitungssystem zum Senden von Daten von einer Server-Einheit, die Daten aufweist, zu einer Client-Einheit, die mit der Server-Einheit über ein Netzwerk so verbunden ist, dass sie verschiedene Informationselemente senden/empfangen kann,
wobei die Server-Einheit umfasst:
eine Datenpaket-Erzeugungseinrichtung zum Erzeugen von Datenpakten durch Teilen von Daten;
eine Diagnosepaket-Erzeugungseinrichtung zum Erzeugen von Blindpaketen, die zum Berechnen einer effektiven Sendegeschwindigkeit des Netzwerks zu venivenden sind;
eine Sende-Steuereinrichtung, die die Datenpakete und die Blindpakete auf einer Zeitteilbasis so sendet, dass sie die Datenpakete bei einer Sendegeschwindigkeit sendet, die höher ist als eine Sendegeschwindigkeit der Datenpakete, indem sie ein Anforderungssignal, das Senden der Daten anfordert, erfasst und erkennt; und
eine Geschwindigkeits-Spezifizierungseinrichtung, die Geschwindigkeits-Informationen über die effektive Sendegeschwindigkeit von der Client-Einheit über das Netzwerk erfasst und die Sendegeschwindigkeit der durch die Sende-Steuereinheit gesendeten Datenpakete auf Basis der erfassten Geschwindigkeits-Informationen spezifiziert;
wobei die Client-Einheit umfasst:
eine Paket-Empfangseinrichtung zum Empfangen der Datenpakete und des Blindpakets von der Server-Einheit über das Netzwerk;
einen Sendegeschwindigkeits-Detektor, der das Volumen der in dem Netzwerk fehlenden Datenpakete erkennt und auf die durch die Paket-Empfangseinrichtung empfangenen Blindpakete bezieht und die effektive Sendegeschwindigkeit des Netzwerks auf Basis des erkannten Volumens der fehlenden Blindpakete berechnet; und
eine Geschwindigkeits-Informations-Erzeugungseinrichtung, die Geschwindigkeits-Informationen über die durch-den-Sendegeschwindigkeits-Detektor berechnete effektive Sendegeschwindigkeit erzeugt und die erzeugten Geschwindigkeits-Informationen über das Netzwerk zu der Server-Einheit sendet.

18. Datenverarbeitungssystem zum Senden von Daten von einer Server-Einheit, die Daten aufweist, zu einer Client-Einheit, die mit der Server-Einheit über ein Netzwerk so verbunden ist, dass sie verschiedene Informationselemente senden/empfangen kann,
wobei die Server-Einheit umfasst:
eine Datenpaket-Erzeugungseinrichtung zum Erzeugen von Datenpaketen durch Teilen von Daten;
eine Diagnosepaket-Erzeugungseinrichtung zum Erzeugen von Blindpaketen mit Prioritätsinformationen über Priorität, die niedriger ist als Priorität der Datenpakete zum Senden über das Netzwerk;
eine Sende-Steuereinheit, die die Blindpakete zusammen mit den Datenpaketen sendet, indem sie ein Anforderungssignal, das Senden der Daten zu der Client-Einheit über das Netzwerk anfordert, erfasst und erkennt; und
eine Geschwindigkeits-Spezifizierungseinrichtung, die Geschwindigkeits-Informationen über die effektive Sendegeschwindigkeit von der Client-Einheit über das Netzwerk erfasst und eine Sendegeschwindigkeit der durch die Sende-Steuereinheit gesendeten Datenpakete auf Basis der erfassten Geschwindigkeits-Informationen spezifiziert;
wobei die Client-Einheit umfasst:
eine Paket-Empfangseinrichtung zum Empfangen der Datenpakete und des Blindpakets;
einen Sendegeschwindigkeits-Detektor, der das Volumen der in dem Netzwerk fehlenden Blindpakete erkennt und auf die durch die Paket-Empfangseinrichtung empfangenen Blindpakete bezieht und die effektive Sendegeschwindigkeit des Netzwerks auf Basis des erkannten Volumens der fehlenden Blindpakete berechnet; und
eine Geschwindigkeits-Informations-Erzeugungseinrichtung, die Geschwindigkeits-Informationen über die durch den Sendegeschwindigkeits-Detektor berechnete Sendegeschwindigkeit erzeugt und die erzeugten Geschwindigkeits-Informationen über das Netzwerk zu der Server-Einheit sendet.

19. Datenverarbeitungsverfahren zum Verarbeiten von über ein Netzwerk durch einen Computer zu sendenden Daten, wobei das Verfahren die folgenden Schritte umfasst:
Erzeugen von Datenpaketen durch Teilen von Daten und Erzeugen von Blindpaketen, die zum Berechnen einer effektiven Sendegeschwindigkeit des Netzwerks zu verwenden sind;
Senden der Datenpakete und der Blindpakete über das Netzwerk auf einer Zeitteilbasis, um die Blindpakete bei einer Sendegeschwindigkeit zu senden, die höher ist als eine Sendegeschwindigkeit der Datenpakete, indem ein Anforderungssignal erfasst und erkannt wird, das Senden der Daten anfordert;
Erfassen von Geschwindigkeits-Informationen über die effektive Sendegeschwindigkeit, die auf Basis des Volumens der Blindpakete berechnet wird, die in dem Netzwerk nach-dem Senden über das-Netzwerk fehlen;
Spezifizieren der Sendegeschwindigkeit der Datenpakete auf Basis der erfassten Geschwindigkeits-Informationen; und
Senden der Datenpakete über das Netzwerk bei der spezifizierten Sendegeschwindigkeit.

20. Datenverarbeitungsverfahren zum Verarbeiten von über ein Netzwerk durch einen Computer zu sendenden Daten, wobei das Verfahren die folgenden Schritte umfasst:
Erzeugen von Datenpaketen durch Teilen von Daten und Erzeugen von Blindpaketen die Prioritätsinformationen über Priorität aufweisen, die niedriger ist als Priorität der Datenpakete zum Senden über das Netzwerk;
Senden der Blindpakete zusammen mit den Datenpaketen über das Netzwerk durch Erfassen und Erkennen eines Anforderungssignals, das Senden der Daten anfordert;
Erfassen von Geschwindigkeits-Informationen über eine effektive Sendegeschwindigkeit, die auf Basis des Volumens der Blindpakete berechnet wird, die in dem Netzwerk nach dem Senden über das Netzwerk fehlen;
Spezifizieren einer Sendegeschwindigkeit der Datenpakete auf Basis der erfassten Geschwindigkeits-Informationen; und
Senden der Datenpakete über das Netzwerk bei der spezifizierten Sendegeschwindigkeit.

21. Datenverarbeitungsverfahren zum Verarbeiten von über ein Netzwerk durch einen Computer zu empfangenden Daten, wobei das Verfahren die folgenden Schritte umfasst:
Empfangen von Datenpaketen, die durch Teilen von Daten erzeugt werden, und von Blindpaketen, die zum Berechnen einer effektiven Sendegeschwindigkeit des Netzwerks zu verwenden sind, wobei die Datenpakete und die Blindpakete über das Netzwerk auf einer Zeitteilbasis gesendet werden;
Erkennen des Volumens der Blindpakete, die in dem Netzwerk fehlen und Beziehen auf die empfangenen Datenpakete;
Berechnen der effektiven Sendegeschwindigkeit des Netzwerks auf Basis des erkannten Volumens der fehlenden Datenpakete;
Erzeugen von Geschwindigkeits-Informationen über die berechnete effektive Sendegeschwindigkeit; und
Senden der erzeugten Geschwindigkeits-Informationen über das Netzwerk.

22. Datenverarbeitungsverfahren zum Verarbeiten von über ein Netzwerk durch einen Computer zu empfangenden Daten, wobei das Verfahren die folgenden Schritte umfasst:
Empfangen von Datenpaketen, die durch Teilen von Daten erzeugt werden, und von Blindpaketen die Prioritätsinformationen über Priorität aufweisen, die niedriger ist als Priorität der Datenpakete zum Senden über das Netzwerk, wobei die Datenpakete und die Blindpakete simultan gesendet werden;
Erkennen des Volumens der in dem Netzwerk fehlenden Blindpakete und Beziehen auf die empfangenen Blindpakete;
Berechnen einer effektiven Sendegeschwindigkeit des Netzwerks auf Basis des erkannten Volumens der fehlenden Datenpakete;
Erzeugen von Geschwindigkeits-Informationen über die berechnete effektive Sendegeschwindigkeit; und
Senden der erzeugten Geschwindigkeits-Informationen über das Netzwerk.

23. Aufzeichnungsmedium, das ein Datenverarbeitungsprogramm speichert, das das Datenverarbeitungsverfahren nach einem der Ansprüche 19 bis 22 durch einen Computer ausführt, wenn das Programm auf einem Computer läuft.

## Revendications

1. Dispositif de traitement de données pour transmettre des données au moyen d'un réseau, le dispositif comprenant :
un générateur de paquets de données pour générer des paquets de données en divisant les données ;
un générateur de paquets de diagnostic pour générer des paquets fictifs destinés à être utilisés pour calculer une vitesse de transmission effective du réseau ;
un contrôleur de transmission pour transmettre les paquets de données et les paquets fictifs au moyen du réseau sur une base de division dans le temps, de façon à transmettre les paquets fictifs à une vitesse de transmission qui est plus élevée qu'une vitesse de transmission des paquets de données en acquérant et en reconnaissant un signal de demande qui demande une transmission des données ; et
un spécificateur de vitesse pour acquérir des informations de vitesse relatives à la vitesse de transmission effective telle qu'elle a été calculée sur la base du volume des paquets fictifs manquants sur le réseau après la transmission par le contrôleur de transmission, et pour spécifier la vitesse de transmission des paquets de données transmis par le contrôleur de transmission sur la base des informations de vitesse acquises.

2. Dispositif selon la revendication 1, dans lequel le contrôleur de transmission est pourvu d'un commutateur pour sélectionner, soit les paquets de données, soit les paquets fictifs, lors de la transmission des paquets de données et des paquets fictifs au moyen du réseau sur une base de division dans le temps.

3. Dispositif selon la revendication 1 ou 2, dans lequel le contrôleur de transmission est adapté pour transmettre les paquets fictifs en premier quand il reconnaît un signal de demande.

4. Dispositif selon l'une quelconque des revendications 1 à 3, dans lequel :
les paquets fictifs ont des informations de priorité d'un niveau de priorité inférieur au niveau de priorité des paquets de données pour la transmission au moyen du réseau.

5. Dispositif de traitement de données pour transmettre des données au moyen d'un réseau, le dispositif comprenant :
un générateur de paquets de données pour générer des paquets de données en divisant les données ;
un générateur de paquets de diagnostic pour générer des paquets fictifs ayant des informations de priorité d'un niveau de priorité inférieur au niveau de priorité des paquets de données pour la transmission au moyen du réseau ;
un contrôleur de transmission pour transmettre les paquets fictifs en même temps que les paquets de données au moyen du réseau en acquérant et en reconnaissant un signal de demande qui demande une transmission des données ; et
un spécificateur de vitesse pour acquérir des informations de vitesse relatives à une vitesse de transmission effective au moyen du réseau, telle qu'elle a été calculée sur la base du volume des paquets fictifs manquants sur le réseau après la transmission par le contrôleur de transmission, et pour spécifier une vitesse de transmission des paquets de données transmis par le contrôleur de transmission sur la base des informations de vitesse acquises.

6. Dispositif selon l'une quelconque des revendications 1 à 5, dans lequel :
le contrôleur de transmission est adapté pour transmettre les paquets fictifs au moyen du réseau à une vitesse de transmission qui est plus élevée que la vitesse de transmission effective du réseau.

7. Dispositif selon l'une quelconque des revendications 1 à 6, dans lequel :
le spécificateur de vitesse est adapté pour spécifier une vitesse de transmission moins élevée que la vitesse de transmission effective contenue dans les informations de vitesse pour les paquets de données.

8. Dispositif de traitement de données pour recevoir des données au moyen d'un réseau, le dispositif comprenant :
un dispositif de réception de paquets pour recevoir des paquets de données formés en divisant les paquets de données et les paquets fictifs qui doivent être utilisés pour calculer une vitesse de transmission effective du réseau, les paquets de données et les paquets fictifs étant transmis au moyen du réseau sur une base de division dans le temps ;
un détecteur de vitesse de transmission pour reconnaître le volume des paquets fictifs manquants sur le réseau et pour faire référence aux paquets fictifs reçus par le dispositif de réception de paquets et pour calculer la vitesse de transmission effective du réseau sur la base du volume reconnu de paquets fictifs manquants ; et
un générateur d'informations de vitesse pour générer des informations de vitesse relatives à la vitesse de transmission effective telle qu'elle a été calculée par le détecteur de vitesse de transmission, et pour transmettre les informations de vitesse générées au moyen du réseau.

9. Dispositif selon la revendication 8, comprenant en outre :
un tampon pour stocker momentanément les paquets de données reçus par le dispositif de réception de paquets ;
et
un détecteur de niveau de remplissage de tampon pour reconnaître le volume des paquets de données accumulés, qui sont accumulés dans le tampon, pour générer un signal de demande de paquets qui demande la transmission des paquets fictifs quand le volume reconnu des paquets accumulés dépasse une partie prédéterminée de la capacité du tampon, mais pour générer un signal de demande de paquets de données qui demande une transmission des paquets de données quand le volume reconnu des paquets accumulés n'atteint pas la partie prédéterminée de la capacité du tampon et pour transmettre le signal de demande de paquets généré, au moyen du réseau.

10. Dispositif selon la revendication 9, comprenant en outre :
un contrôleur de sortie pour reconnaître le type des paquets reçus par le dispositif de réception de paquets et pour délivrer en sortie les paquets de données vers le tampon quand les paquets reconnus sont des paquets de données, mais pour délivrer en sortie les paquets fictifs vers le détecteur de vitesse de transmission quand les paquets reconnus sont des paquets fictifs.

11. Dispositif selon la revendication 10, dans lequel le contrôleur de sortie est pourvu d'un commutateur pour délivrer en sortie les paquets reçus par le dispositif de réception de paquets, soit vers le tampon, soit vers le détecteur de vitesse de transmission.

12. Dispositif selon l'une quelconque des revendications 8 à 11, dans lequel les paquets fictifs ont des informations de priorité d'un niveau de priorité inférieur au niveau de priorité des paquets de données pour la transmission au moyen du réseau.

13. Dispositif de traitement de données pour recevoir des données au moyen d'un réseau, le dispositif comprenant :
un dispositif de réception de paquets pour recevoir des paquets de données formés en divisant des paquets de données et des paquets fictifs qui ont des informations de priorité d'un niveau de priorité inférieur au niveau de priorité des paquets de données pour la transmission au moyen du réseau, les paquets de données et les paquets fictifs étant transmis, en même temps, au moyen du réseau ;
un détecteur de vitesse de transmission pour reconnaître le volume des paquets fictifs manquants sur le réseau et pour faire référence aux paquets fictifs reçus par le dispositif de réception de paquets et pour calculer la vitesse de transmission effective du réseau sur la base du volume reconnu de paquets fictifs manquants ; et
un générateur d'informations de vitesse pour générer des informations de vitesse relatives à la vitesse de transmission effective telle qu'elle a été calculée par le détecteur de vitesse de transmission, et pour transmettre les informations de vitesse générées au moyen du réseau.

14. Système de traitement de données, comprenant :
le dispositif de traitement de données selon l'une quelconque des revendications 1 à 7 ; et
une unité client qui est reliée au dispositif de traitement de données au moyen d'un réseau de façon à être en mesure de transmettre des données vers, et de recevoir des données depuis, le dispositif de traitement de données, et comprenant un dispositif de réception de paquets pour recevoir les paquets de données et les paquets fictifs transmis au moyen du réseau, un détecteur de vitesse de transmission pour calculer la vitesse de transmission effective, et un générateur d'informations de vitesse pour générer des informations de vitesse sur la base de la vitesse de transmission effective calculée par le détecteur de vitesse de transmission et pour transmettre les informations de vitesse vers le dispositif de traitement de données au moyen du réseau.

15. Système de traitement de données, comprenant :
le dispositif de traitement de données selon l'une quelconque des revendications 8 à 12 ; et
une unité serveur qui est reliée au dispositif de traitement de données au moyen d'un réseau de façon à être en mesure de transmettre des données vers, et de recevoir des données depuis, le dispositif de traitement de données, et comprenant un générateur de paquets de données pour générer des paquets de données, un générateur de paquets de diagnostic pour générer des paquets fictifs, un contrôleur de transmission pour transmettre les paquets de données et les paquets fictifs au moyen du réseau sur une base de division dans le temps à des vitesses de transmission respectives, la vitesse de transmission des paquets fictifs étant supérieure à la vitesse de transmission des paquets de données, en acquérant et en reconnaissant le signal de demande transmis au moyen du réseau, et un spécificateur de vitesse pour acquérir les informations de vitesse et spécifier la vitesse de transmission des paquets de données qui doivent être transmis par le contrôleur de transmission sur la base des informations de vitesse acquises.

16. Système de traitement de données, comprenant :
le dispositif de traitement de données selon la revendication 13 ; et
une unité serveur qui est reliée au dispositif de traitement de données au moyen d'un réseau de façon à être en mesure de transmettre des données vers, et de recevoir des données depuis, le dispositif de traitement de données, et comprenant un générateur de paquets de données pour générer des paquets de données, un générateur de paquets de diagnostic pour générer des paquets fictifs, un contrôleur de transmission pour transmettre les paquets de données et les paquets fictifs, en même temps, au moyen du réseau, en acquérant et en reconnaissant le signal de demande transmis au moyen du réseau, et un spécificateur de vitesse pour acquérir les informations de vitesse et spécifier la vitesse de transmission des paquets de données qui doivent être transmis par le contrôleur de transmission sur la base des informations de vitesse acquises.

17. Système de traitement de données pour transmettre des données à partir d'une unité serveur ayant des données vers une unité client qui est reliée à l'unité serveur au moyen d'un réseau de façon à être en mesure de transmettre / recevoir divers éléments d'informations,
l'unité serveur comprenant:
un générateur de paquets de données pour générer des paquets de données en divisant des données ;
un générateur de paquets de diagnostic pour générer des paquets fictifs destinés à être utilisés pour calculer une vitesse de transmission effective du réseau ;
un contrôleur de transmission pour transmettre les paquets de données et les paquets fictifs sur une base de division dans le temps, de façon à transmettre les paquets fictifs à une vitesse de transmission qui est plus élevée qu'une vitesse de transmission des paquets de données en acquérant et en reconnaissant un signal de demande qui demande une transmission des données
un spécificateur de vitesse pour acquérir des informations de vitesse relatives à la vitesse de transmission effective depuis l'unité client au moyen du réseau, et pour spécifier la vitesse de transmission des paquets de données transmis par le contrôleur de transmission sur la base des informations de vitesse acquises ;
l'unité client comprenant :
un dispositif de réception de paquets pour recevoir les paquets de données et les paquets fictifs depuis l'unité serveur au moyen du réseau ;
un détecteur de vitesse de transmission pour reconnaître le volume des paquets fictifs manquants sur le réseau et pour faire référence aux paquets fictifs reçus par le dispositif de réception de paquets et pour calculer la vitesse de transmission effective du réseau sur la base du volume reconnu de paquets fictifs manquants ; et
un générateur d'informations de vitesse pour générer des informations de vitesse relatives à la vitesse de transmission effective telle qu'elle a été calculée par le détecteur de vitesse de transmission, et pour transmettre les informations de vitesse générées vers l'unité serveur au moyen du réseau.

18. Système de traitement de données pour transmettre des données à partir d'une unité serveur ayant des données vers une unité client qui est reliée à l'unité serveur au moyen d'un réseau de façon à être en mesure de transmettre / recevoir divers éléments d'informations,
l'unité serveur comprenant
un générateur de paquets de données pour générer des paquets de données en divisant des données ;
un générateur de paquets de diagnostic pour générer des paquets fictifs ayant des informations de priorité d'un niveau de priorité inférieur au niveau de priorité des paquets de données pour la transmission au moyen du réseau ;
un contrôleur de transmission pour transmettre les paquets fictifs en même temps que les paquets de données en acquérant et en reconnaissant un signal de demande qui demande une transmission des données vers l'unité client, au moyen du réseau ; et
un spécificateur de vitesse pour acquérir des informations de vitesse relatives à la vitesse de transmission effective depuis l'unité client au moyen du réseau, et pour spécifier une vitesse de transmission des paquets de données transmis par le contrôleur de transmission sur la base des informations de vitesse acquises ;
l'unité client comprenant :
un dispositif de réception de paquets pour recevoir les paquets de données et les paquets fictifs ;
un détecteur de vitesse de transmission pour reconnaître le volume des paquets fictifs manquants sur le réseau et pour faire référence aux paquets fictifs reçus par le dispositif de réception de paquets et pour calculer la vitesse de transmission effective du réseau sur la base du volume reconnu de paquets fictifs manquants ; et
un générateur d'informations de vitesse pour générer des informations de vitesse relatives à la vitesse de transmission effective telle qu'elle a été calculée par le détecteur de vitesse de transmission, et pour transmettre les informations de vitesse générées vers l'unité serveur au moyen du réseau.

19. Procédé de traitement de données pour traiter des données qui doivent être transmises au moyen d'un réseau par un ordinateur, le procédé comprenant les étapes consistant à :
générer des paquets de données en divisant des données et générer des paquets fictifs destinés à être utilisés pour calculer une vitesse de transmission effective du réseau ;
transmettre les paquets de données et les paquets fictifs au moyen du réseau sur une base de division dans le temps, de façon à transmettre les paquets fictifs à une vitesse de transmission qui est plus élevée qu'une vitesse de transmission des paquets de données en acquérant et en reconnaissant un signal de demande qui demande une transmission des données ;
acquérir des informations de vitesse relatives à la vitesse de transmission effective telle qu'elle a été calculée sur la base du volume des paquets fictifs manquants sur le réseau après la transmission, au moyen du réseau ;
spécifier la vitesse de transmission des paquets de données sur la base des informations de vitesse acquises ; et
transmettre les paquets de données au moyen du réseau à la vitesse de transmission spécifiée.

20. Procédé de traitement de données pour traiter des données qui doivent être transmises au moyen d'un réseau par un ordinateur, le procédé comprenant les étapes consistant à :
générer des paquets de données en divisant des données et générer des paquets fictifs ayant des informations de priorité d'un niveau de priorité inférieur au niveau de priorité des paquets de données pour la transmission au moyen du réseau ;
transmettre les paquets fictifs en même temps que les paquets de données au moyen du réseau en acquérant et en reconnaissant un signal de demande qui demande une transmission des données ;
acquérir des informations de vitesse relatives à une vitesse de transmission effective telle qu'elle a été calculée sur la base du volume des paquets fictifs manquants sur le réseau après la transmission, au moyen du réseau ;
spécifier une vitesse de transmission des paquets de données sur la base des informations de vitesse acquises ; et
transmettre les paquets de données au moyen du réseau à la vitesse de transmission spécifiée.

21. Procédé de traitement de données pour traiter des données qui doivent être reçues au moyen d'un réseau par un ordinateur, le procédé comprenant les étapes consistant à :
recevoir des paquets de données formés en divisant des paquets de données et des paquets fictifs qui doivent être utilisés pour calculer une vitesse de transmission effective du réseau, les paquets de données et les paquets fictifs étant transmis au moyen du réseau sur une base de division dans le temps ; reconnaître le volume des paquets fictifs manquants sur le réseau et faire référence aux paquets fictifs reçus ;
calculer la vitesse de transmission effective du réseau sur la base du volume reconnu des paquets fictifs manquants ;
générer des informations de vitesse relatives à la vitesse de transmission effective calculée ; et transmettre les informations de vitesse générées au moyen du réseau.

22. Procédé de traitement de données pour traiter des données qui doivent être reçues au moyen d'un réseau par un ordinateur, le procédé comprenant les étapes consistant à :
recevoir des paquets de données formés en divisant des paquets de données et des paquets fictifs qui ont des informations de priorité d'un niveau de priorité inférieur au niveau de priorité des paquets de données pour la transmission au moyen du réseau, les paquets de données et les paquets fictifs étant transmis, en même temps ;
reconnaître le volume des paquets fictifs manquants sur le réseau et faire référence aux paquets fictifs reçus ;
calculer une vitesse de transmission effective du réseau sur la base du volume reconnu des paquets fictifs manquants ;
générer des informations de vitesse relatives à la vitesse de transmission effective calculée ; et
transmettre les informations de vitesse générées au moyen du réseau.

23. Support d'enregistrement pour stocker un programme de traitement de données qui exécute le procédé de traitement de données selon l'une quelconque des revendications 19 à 22 par un ordinateur quand ledit programme est exécuté sur un ordinateur.
